# EUROPEAN PATENT SPECIFICATION

(11) **EP 0 371 619 B1**
(45) Date of publication and mention of the grant of the patent: **05.02.1997**
(21) Application number: 89311252.4
(22) Date of filing: 31.10.1989
(51) Int. Cl.: G06F 9/46

(54) **Data input/output control system in an operating system**
Daten-Eingangs/-Ausgangssteuerungssystem in einem Betriebssystem
Système de commande d'entrée/sortie de données dans un système opérationnel

(30) Priority: 31.10.1988 JP 273342/88
(43) Date of publication of application: 06.06.1990
(73) Proprietor: FUJITSU LIMITED, Kawasaki-shi, Kanagawa 211 (JP)
(72) Inventor: Sonobe, Masayuki, Urayasu-shi Chiba 279 (JP)
(74) Representative: Fane, Christopher Robin King

(56) References cited:
- MAURICE J. BACH 'The Design of the Unix Operating System' 1986 , PRENTICE/HALL INTERNATIONAL, INC., Englewood Cliffs, New Jersey, USA; pp 112-117
- 5TH INT. CONF. ON DISTRIBUTED SYSTEMS 13 May 1985, IEEE, SILVER SPRING, USA, pp 99-106; W. ZWAENEPOEL: 'Implementation and performance of pipes in the V-System'

## Description

The present invention relates to data input/output in computer systems. In particular the present invention relates to data input/output control systems, provided in operating systems, for executing data input/output in accordance with data input instructions (specifying that data is to be input to a main storage of the computer system) and data output instructions (specifying that data is to be output from the main storage), the data input and output instructions being issued by programs.

A batch process, the most generally available data process, does not deal immediately with data every time data is produced, and instead processes data comprising a certain number of grouped units. For example, where the data relates to the sales status of goods, the data is grouped for processing in units of weeks or months.

When the units are shorter than those stated above, data grouped in predetermined units are outputted as a file to an external storage apparatus such as a magnetic disc by a data output program. After the file is completed, the data in the file can be processed. It is then possible to execute a data input program for processing the data in the file after the data output program has been executed to store them into the file.

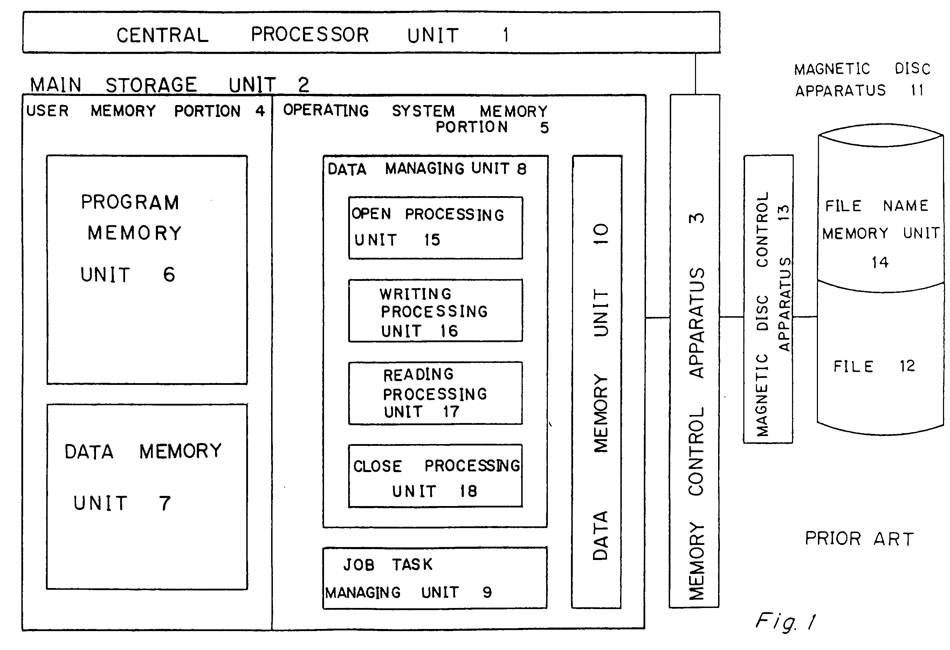

Figure 1 shows a structural block diagram of computing apparatus employing a basic sequential access method (BSAM) used in a first prior art data input/output control system. This computing apparatus may be considered to have data input/output control means operable to execute a file output program for outputting data from a main storage unit of the apparatus to an external storage unit connected with the apparatus when it is in use, the file output program designating a predetermined file of the external storage unit for the storage of the output data, and also operable to execute a file input program for inputting data into the main storage unit from a predetermined file of the external storage unit designated by the file input program and for processing such input data; the said data input/output control means being controlled by an operating system of the apparatus which comprises: a data management unit for controlling such outputting and inputting of data; a job/task management unit operable in response to a job statement, written in a job control language and specifying jobs or job steps to be executed one after the next by the operating system, to control initiation, waiting and termination of programs associated with the specified jobs or job steps; and a data memory unit for use by the operating system when the job/task management unit and the data management unit cause such a file output program or such a file input program to be executed.

In the Figure 1 computing apparatus, central processor unit 1, main storage unit 2 and memory control unit 3 are connected as shown. The main storage unit 2 comprises user memory portion 4 and operating system memory portion 5. User memory unit 4 comprises program memory unit 6 and data memory unit 7. A program named data management unit 8, which is a part of the operating system (OS), is stored in the operating system memory portion. A program named job/task management unit 9, for managing an initiation and completion of the program, which is also a part of the operating system, is stored in operating system memory portion 5. Further, data memory unit 10, which is used by these two managing units 8 and 9, is provided. Data input and output means transfer data between the main storage unit 2 and peripheral apparatuses of a computer, for example between a file 12 in magnetic disc apparatus 11 and data memory unit 7 within user memory portion 4 in Figure 1. The input and output is defined from the viewpoint of data memory unit 7. Magnetic disc control apparatus 13 actually transfers the data between magnetic disc apparatus 11 and memory control apparatus 3. File name memory portion 14 stores the name (file name) determined by the user for the file 12 within magnetic apparatus 11. Data management unit 8 comprises open process unit 15, writing process unit 16, reading process unit 17 and close process unit 18.

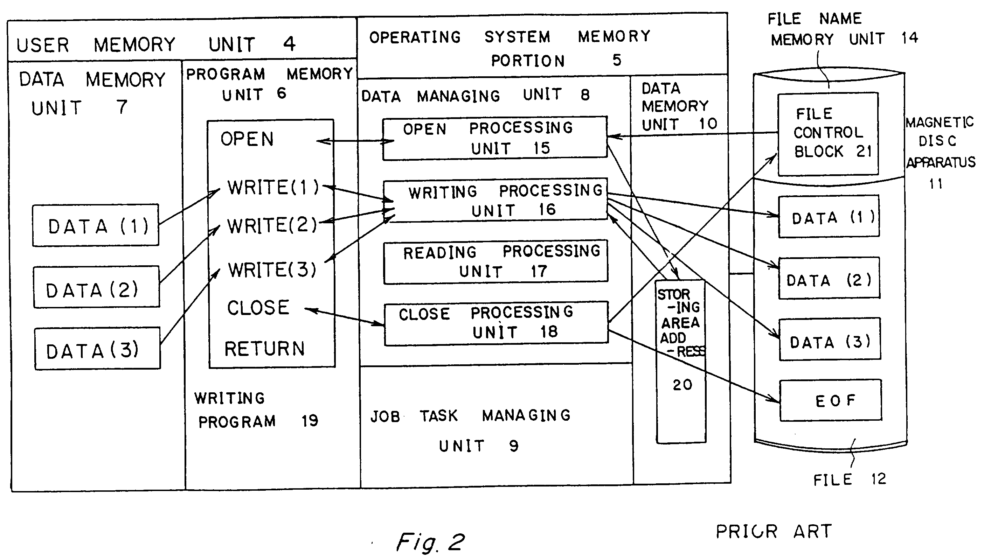

Figure 2 is an operational view for explaining how data is written, namely, how data is outputted from main storage unit 2 in Figure 1. Writing program (file output program) 19, produced by an operating system in program memory unit 6 and initiated by the user, performs an initializing process in accordance with a sequence previously programmed by the user and issues an OPEN instruction. When it receives an OPEN instruction to prepare a file designated by a parameter of the instruction, open process unit 15 of data management unit 8 for the operating system confirms that the magnetic disc apparatus 11 to be used for storing the file is available for use and that a file of the same name does not already exist in file name memory unit 14. Then open process unit 15 stores in a storing address area 20 of data memory unit 10 the address of the area of the magnetic disc apparatus 11 which is to be used for storing the file and returns control to writing program 19. Then, writing program 19 designates that DATA (1) is requested to be outputted from a predetermined address of data memory unit 7 of user memory unit 4 and issues a WRITE instruction. Writing process unit 16 refers to the storing address area 20 of data memory unit 10 and writes DATA (1) in the corresponding address of file 12. In a similar manner to the above, DATA (2) and DATA (3) are transferred from the data memory unit 7. Thereafter, writing program 19 issues a CLOSE instruction when there is no more data to be written. Close process unit 18, which receives the CLOSE instruction, writes a code representing a data end (called end-of-file or EOF) in file 12 and also writes the file name and storing address of file 12 in magnetic disc apparatus 11 in the file name storing unit 14 as a form of file control block 21 so that other programs can read them. Thereafter, it returns control to writing program 19. Then, writing program 19 completes executing a follow-up process, issues a RETURN instruction to declare a completion and is deleted from program memory unit 6 by job/task management unit 9.

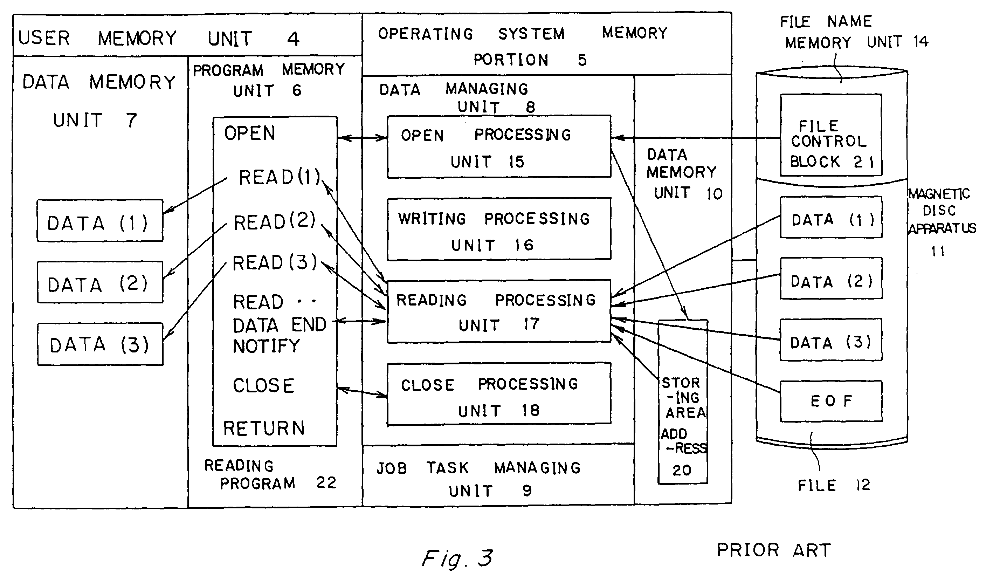

Figure 3 shows a drawing for explaining an operation in which data reading, i.e. data input to main storage unit 2, is performed in the structure shown in Figure 1. Reading program (file input program) 22 entered into program memory unit 6 by a user is not always immediately initiated. When writing program 19, shown in Figure 2, is being executed and is using a file having the same file name as that designated to be used by reading program 22, the initiation is kept waiting by job/task management unit 9. Depending on the designation, reading program 22 is kept waiting until writing program 19 issues a RETURN instruction or until writing program 19 issues a CLOSE instruction.

When reading program 22 is initiated, an initial process is executed in accordance with a sequence previously programmed by the user and then an OPEN instruction is issued. When open process unit 15 of data management unit 8 of the operating system receives the OPEN instruction, it confirms that magnetic disc apparatus 11 in which the designated file is stored is available for use and file control block 21 having the particular name of the file already exists in file name storing unit 14, and that file 12 exists. Then, file name memory unit 14 stores in data memory unit 10 the address of the area in which the file is stored in the magnetic disc apparatus 11, and returns control to reading program 22. Reading program 22 issues a READ instruction requesting that an item of data be inputted to data memory unit 7 in the user memory unit 4. Reading process unit 17 refers to the storing address area 20 in data memory unit 10 to determine the address of DATA (1) in file 12 and then reads out DATA (1) into data memory unit 7. Similarly, DATA (2) and DATA (3) are read out. Thereafter, reading program 22 issues a READ instruction to read another data item (it does not know how many data items there are in the file). Then, as no further data exists in file 12, a data end code (EOF) appears. Thus, reading process unit 17 does not transfer the data, but notifies reading program 22 of "data end". Upon receipt of this notice, reading program 22 issues a CLOSE instruction. Close process unit 18 receives the CLOSE instruction and immediately returns the control to reading program 22. Thereafter, when reading program 22 completes the follow-up process and declares the completion by issuing a RETURN instruction, the reading program is deleted by job/task management unit 9.

If a job statement written in job control language designates that reading program 22 is to be initiated immediately after the end of writing program 19 when the user initiates writing program 19, job/task management unit 9, which is a program of the designated name from a program library, automatically initiates the reading program immediately after writing program 19 issues a RETURN instruction and declares the end of its program. However, in the case of an abnormal program end (when writing program 19 does not reach the program end in a normal manner because of an error in the data given by the program or because an operator has requested that execution be stopped) a reading program 22 using the same file 12 as the previous writing program 19 should not generally be initiated. In such a case, after the cause of the abnormal ending has been removed, it is necessary to execute writing program 19 again and rewrite file 12 correctly. Thus, at this time, job/task management unit 9 detects the abnormal state and does not automatically initiate reading program 22.

The above automatic initiation is called a job step control or job control. Conventionally, when two programs having an output-input relationship in which data is stored in a predetermined file by one program (the writing or file output program) and retrieved by the other program (the reading or file input program) are to be executed using such job (step) control, the file input program is kept waiting for the end of the file output program. Thus, it is usual for a user to write a job statement (in job control language) specifying that these programs are respective jobs or job steps that are to be sequentially executed. Therefore, only when writing program 19 of Figure 2 is completed, is reading program 22 for inputting the file initiated by job/task management unit 9. Therefore, there is a problem that the user cannot obtain results of the execution of the two programs unless he waits for a time period equal to the sum of the respective execution times of both programs 19 and 22.

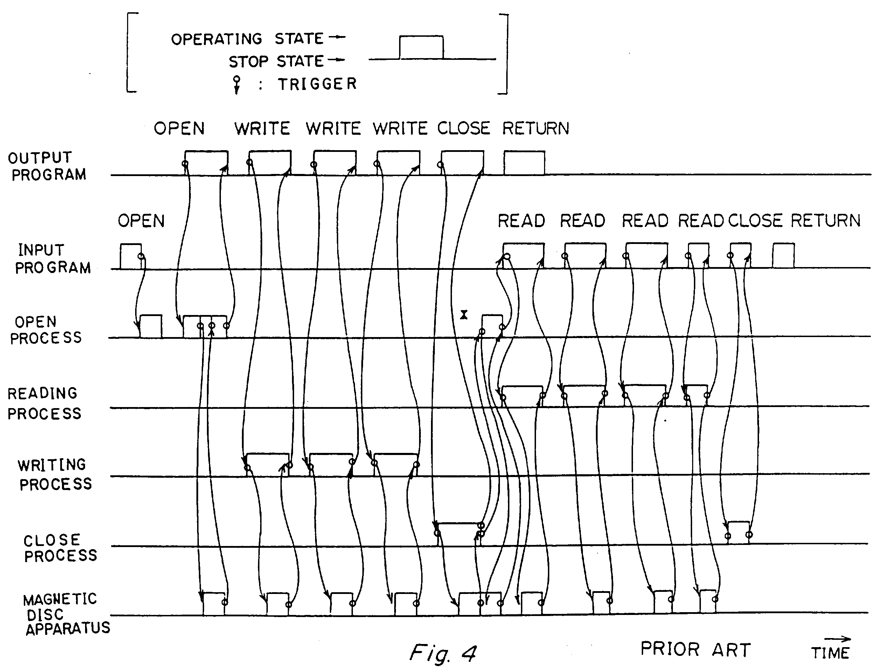

Figure 4 is a timing chart showing the above defects of the prior art. In Figure 4, a temporary high portion of the graph designates that the process is being operated. A circular mark and associated arrow show that one event (a start or stop of an operation), indicated by the arrow head, is triggered by another event (start or stop of an operation) indicated by the circular mark. It is supposed that the two programs, i.e. writing program and reading program, are initiated concurrently at the first stage. However, the open process of reading program is kept waiting (as shown by the star mark in Figure 4) until all the data in the file is written.

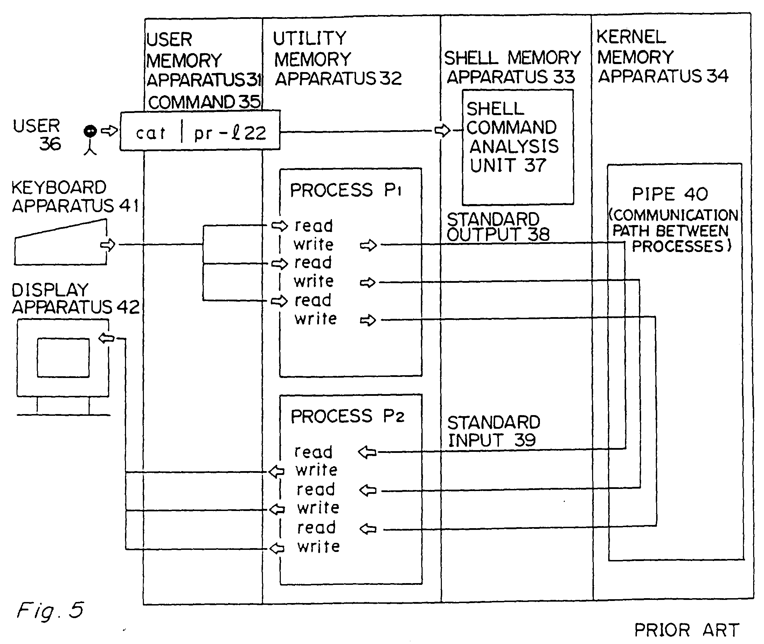

Figure 5 explains a "pipe", which is used in a second prior art data input and output control method. A computer storage device comprises user memory apparatus 31, utility memory apparatus 32, shell memory apparatus 33, and kernel memory apparatus 34. The storage device is connected to keyboard apparatus 41 and display apparatus 42. Let us suppose that user 36 enters a command 35 (computer instruction) in the form of "cat|pr-ℓ22" using keyboard apparatus 41. In this case, the command is transferred from user memory apparatus 31 to shell memory apparatus 33 and is interpreted in shell command analysis unit 37. The function of "cat", which is the first step in command 35, is to "read a character string from a standard input file and output it to a standard output file". "pr-ℓ22", which is the second step in the command, means "read a standard input file and display it in a standard output file after changing the format to the predetermined format of 22 rows per page". A special symbol "|", which joins these two portions, means "make the standard output file of the program executed by the command written on the left side of the symbol be the standard input file of the program executed by the command written on the right side of the symbol. These two steps may be operated simultaneously, namely by parallel processing." Shell command analysis unit 37 is an analytical process. It recognizes the parallel processing designation. "cat" process programs (namely, utility) use the kernel function and the "pr" utility is produced in an operation unit having, for example, processes P1 and P2 and is arranged in utility memory apparatus 32. Process P1 is configured to have keyboard apparatus 41 as its standard input file. The standard output 38 from process P1 is inputted to a pipe, namely, a communication path between processes, which is newly set in kernel memory apparatus 34. On the other hand, standard input 39 to process P2 is made to correspond to the output from pipe 40. This operation enables the pipe to connect two processes. Further, display 42 is assigned to the standard output of process P2. When the pipe receives input data, it outputs that data without keeping it waiting. Therefore, in this situation, when user 36 inputs a plurality of characters using keyboard apparatus 41, the data written into process P1 by WRITE, is quickly processed by a READ instruction of process P2, independently of how far process P1 advances. Therefore, processes P1 and P2 are processed in parallel.

The "pipe" shown in Figure 5 is a well-known technology, and is described for example in "The Design of the Unix Operating System", Maurice J Bach, Prentice Hall International Inc., Englewood Cliffs, New Jersey, USA, 1986, pp. 112-117. However, it has the defect that only programs which include the input instruction READ for reading from a standard input file and the output instruction WRITE for writing into a standard output file can be used.

The batch-type READ and WRITE instructions in the above-described first prior art method are different in function from the READ instruction and WRITE instruction in the above recited pipe, despite being spelt the same way. The operating system having a "pipe" function, recited in the second prior art method, does not have a job control function for performing batch processing and therefore the batch function and the job control function are distinct from one another. The terminology "batch" may be used in relation to an operating system having a pipe function but this designates a function in which, if shell commands are previously collected and registered, then they can be called in a group. However, this type of operating system cannot realize the batch type input function having the name "basic sequential access method (BSAM)" provided by a different operating system in the prior art. Therefore, although the terminologies of "batch" are overlapped, the batch used in the operating system having the batch function is completely irrelevant to the data input and output control method according to the present invention.

Other batch-type input/output control methods, in addition to the above-recited basic sequential access method, include a basic partition access method (BPAM) for performing a sequential access after the partition member is found, a basic direct access method (BDAM) for performing a retrieval by designating an address or key, and a queued sequence access method (QSAM) for performing an access in units of records. These methods are similar in that they keep an open process of a reading program waiting until all the data of the file is written, as described previously with reference to Figure 4.

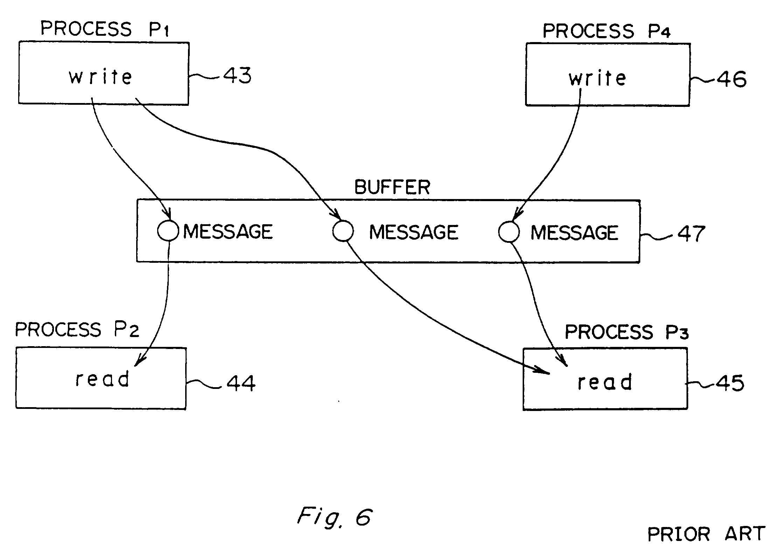

A third prior art data input and output control method, termed an online method, is explained by referring to Figure 6. A plurality of processes P1, P2, P3, and P4 (43 to 46), constituting a system, exchange messages between each other by passing them through buffer 47 or files. According to this method, it is possible for other processes, for example, process P2 44 to read (by a READ instruction) a message which is outputted to buffer 47 by process P1 43, i.e. parallel processing of writing programs and reading programs is possible.

However, in the online method, in order to transfer and receive a message between a plurality of processes it is necessary for the type of the message and the identification of the destination of the message to be specified within the input and output data or in an environment file corresponding to a program. The correspondence (relationship) between the output and input programs is not particularly well defined. For example, when the message transfer from process P1 43 to process P3 45 is completed, there is a possibility that another message will need to be transferred, for example, from process P4 46 to process P3 45, thereby making it difficult to complete the input program of the process P3 45. Because of these differences, it is impossible to employ the online method of input and output parallel processes successfully when using a batch-type input and output control method as is desired in the present invention.

In the prior art batch-type data input and output control method, namely, the method in which a start of the execution of one program for inputting the data of a file is only allowed after all the data constituting that file prepared by another program has been outputted, it is impossible to perform a parallel processing between a file output program and a file input program for processing the file data. Thus, there is a problem that it takes longer to execute the whole process than where a parallel processing is possible.

According to the present invention as defined by the wording of claim 1 there is provided computing apparatus having batch-type data input/output control means operable to execute a file output program for outputting data from a main storage unit of the apparatus to an external storage unit connected with the apparatus when it is in use, the file output program designating a predetermined file of the external storage unit for the storage of the output data, and also operable to execute a file input program for inputting data into the main storage unit from a predetermined file of the external storage unit designated by the file input program and for processing such input data; the said data input/output control means being controlled by an operating system of the apparatus which comprises: a data management unit for controlling such outputting and inputting of data; a job/task management unit operable in response to a job statement, written in a job control language and specifying jobs or job steps to be executed one after the next by the operating system, to control initiation, waiting and termination of programs associated with the specified jobs or job steps; and a data memory unit for use by the operating system when the job/task management unit and the data management unit cause such a file output program or such a file input program to be executed; characterised in that the said operating system further comprises: an input/output parallel management unit having means for registering at least one program pair, which pair is made up of respective such file output and file input programs that designate the same file, and operable, following initiation of both programs of such a registered program pair by the job/task management unit in accordance with such a job statement, to cause the file input program of the pair to be executed in parallel with the file output program of the pair without being kept waiting until execution of the file output program is completed; and an input/output parallel control unit, including a data transfer unit, and operable under the control of the said input/output parallel management unit to employ the main storage unit to transfer data output by the file output program to the file input program of such a program pair during such parallel execution of the two programs, without passing that data through such an external storage unit.

Such computing apparatus can enable both the file output program for issuing the data output instruction and file input program for issuing the data input instruction relating to the same file to be executed in parallel without waiting until such time as execution of the file output program is completed, in a batch type data input and output control method.

Reference will now be made, by way of example, to the accompanying drawings, in which:
Figure 1 is a block diagram of a first prior art data input/output control system,
Figure 2 is a diagram for use in explaining writing of data in the Fig. 1 system,
Figure 3 is a diagram for use in explaining reading of data in the Fig. 1 system,
Figure 4 is a timing chart relating to data reading and writing in the Fig. 1 system,
Figure 5 is a block diagram of a second prior art data input/output control system,
Figure 6 is a view for use in explaining a third prior art data input/output control system,
Figures 7A and 7B are block diagrams showing principles of data input/output control systems embodying the present invention,
Figure 8 is a block diagram showing an embodiment of a data input/output control system according to the present invention,
Figure 9 shows an example of an input/output parallel management table used in the Fig. 8 system;
Figure 10 is a timing chart relating to data reading and writing in the Fig. 8 system;
Figures 11A, 11B, and 11C are detailed flowcharts of a parallel designation register/deletion process performed by the Fig. 8 system,
Figure 12 is an operational flowchart of an input/output parallel management unit in the Fig. 8 system,
Figures 13A, 13B and 13C are detailed flowcharts of an open process in the Fig. 8 system,
Figures 14A, 14B and 14C are detailed flowcharts of a close process in the Fig. 8 system,
Figures 15A and 15B are detailed flowcharts of a data transfer process in the Fig. 8 system,
Figure 16A is a drawing showing an example in which a data input/output control system embodying the present invention is applied to three programs,
Figure 16B is a drawing showing an example in which a data input/output control system embodying the present invention is supplied to many programs, and
Figure 17 is a flowchart for explaining how a preferred embodiment of the present invention operates in a case in which the program ends in an abnormal manner.

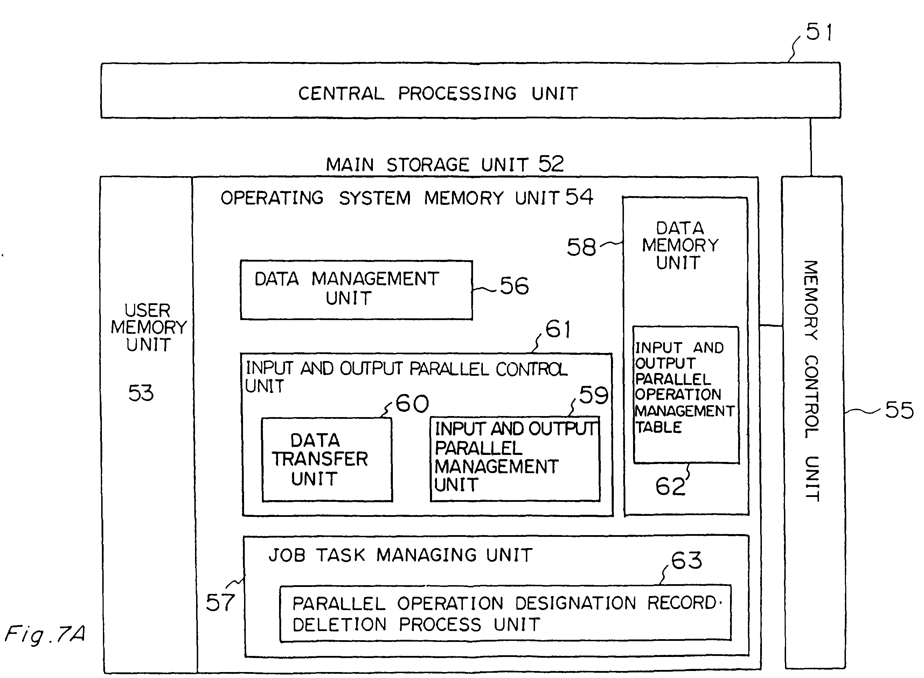

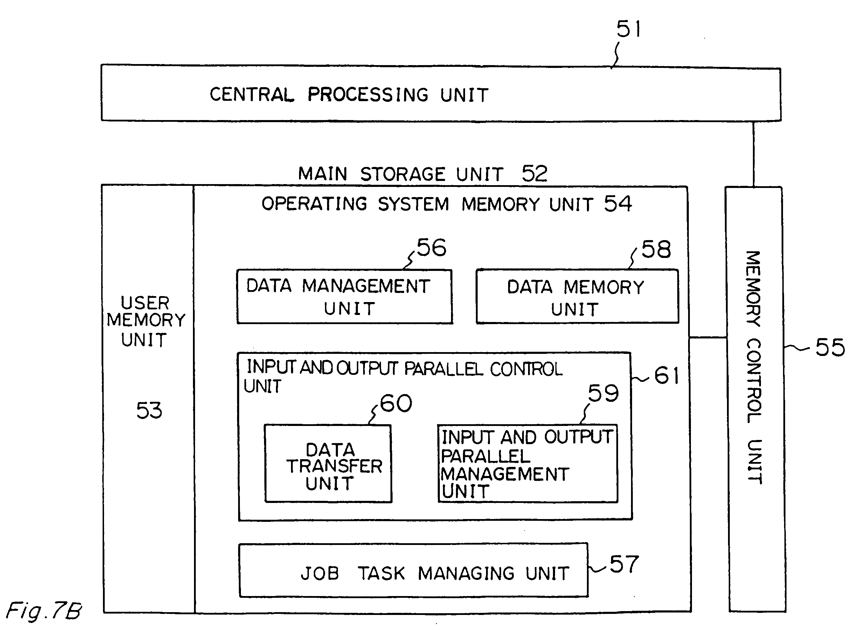

Figure 7A shows the principle of a data input/output control system embodying a first aspect of the present invention and Figure 7B shows principles of such control systems embodying second and third aspects of the invention. As shown in Figures 7A and 7B, the computing apparatus comprises central processing unit 51, main storage unit 52 and memory control unit 55. User memory unit 53 and operating system memory unit 54 are located in main storage unit 52. As is commonly shown in Figures 7A and 7B, data management unit 56 for controlling data writing and data reading, job/task management unit 57 for managing an initiation, waiting operation and an end of a program, and data memory unit 58, used when data management unit 56 and job/task management unit 57 execute a file output program and file input program, are provided in operating system memory unit 54.

In Figures 7A and 7B input/output parallel management unit 59 exchanges control with data management unit 56 and manages whether a parallel process of an output program and an input program is performed for an object file, the output and input programs being transmitted from data management unit 56 in accordance with a file open instruction, for example.

Data transfer unit 60 exchanges data with data management unit 56 under the control of input/output parallel management unit 59 and transfers data from an area of the main storage unit 52 in which it was written by a writing program (file output program) to a reading area of the main storage unit 52 allocated to the reading program (file input program), without the data going through the external storage unit.

In the system of Figure 7A, embodying the first aspect of the present invention, input/output parallel management table 62 is provided in data memory unit 58 and parallel operation designating record/deletion process unit 63 is provided in job task management unit 57 in addition to the structures recited above.

Input and output parallel operation management table 62 stores, as a pair, the respective names of a file output program and a file input program (program pair) which use the same file. Such pairs are stored for respective files.

Parallel operation designating record/deletion process unit 63 is operable to perform changes to the content of the input/output parallel management table 62, i.e. recordal or deletion of the names of output and input programs which make up a pair, in accordance with a program other than the file output program and file input program or in accordance with an instruction from the user.

In the Fig. 7A system, data management unit 56 notifies input/output parallel management unit 59 of the name of a file to be opened in accordance with a file open command from a file output program, for example, writing program. Then, when input/output parallel management unit 59 judges that the file concerned is registered for use in an input and output parallel process, data transfer is made ready by a file open command from the file input program, for example reading program. The data previously stored (written out) by writing program is then transferred to the data area of the reading program in main storage unit 52 by data transfer unit 60 through data management unit 56 without waiting for a completion of the writing program. The control such as initiation or placing the reading/writing programs in a state of waiting for writing out a program and reading a program as a task upon an operation of the parallel input and output is conducted by job/task management unit 57.

Therefore, the above-recited operation replaces the conventional operation in which the data is written into a file an actual external storage unit such as a magnetic disc or magnetic tape and, after the file formation is completed, an operation of a reading out of the data from the file is conducted. Data is directly transferred to a reading program in the units in which the data is written out, for example the units may be a character or a record of a predetermined or variable length. Thus, the data is transferred from one portion of the main storage to another portion of the main storage without going through an external storage apparatus. Therefore, the main storage may be extended to the virtual storage, or the writing and reading speed may be controlled by using more than one buffer, or reading and writing may be conducted in a batch or in a divided manner.

As shown in Figure 7A (first aspect of the invention) it is possible to change the content of input/output parallel management table 62 using parallel designation record (register)/deletion process unit 63 in accordance with an instruction from a user or a different program, whereafter the file output program and file input program which are designated by the user or the different program in the instruction concerned can be processed in a parallel manner.

In the Figure 7B system (second aspect of invention), input/output parallel management table 62 and parallel designation record (register)/deletion process unit 63 are not provided. Parallel processing of file output programs and file input programs previously registered as pairs in input/output parallel management unit 59 is conducted.

A data input/output control system embodying a third aspect of the invention, also described with reference to Figure 7B, operates in the same basic way as the aforedescribed system embodying the second aspect of the invention, but in this case the job/task management unit 57 serves, upon an abnormal completion of one of the file output program and file input program, to cause the other of the file output program and file input program to end as an abnormal stop. When the user designates the following program using the job control language, for example, and both file input and file output programs end in a normal manner, the following program is automatically initiated.

As is recited above, in an embodiment of the present invention, it is possible to operate a file output program and a file input program which process the same file in a parallel manner without changing the conventional batch-type data input program and data output program.

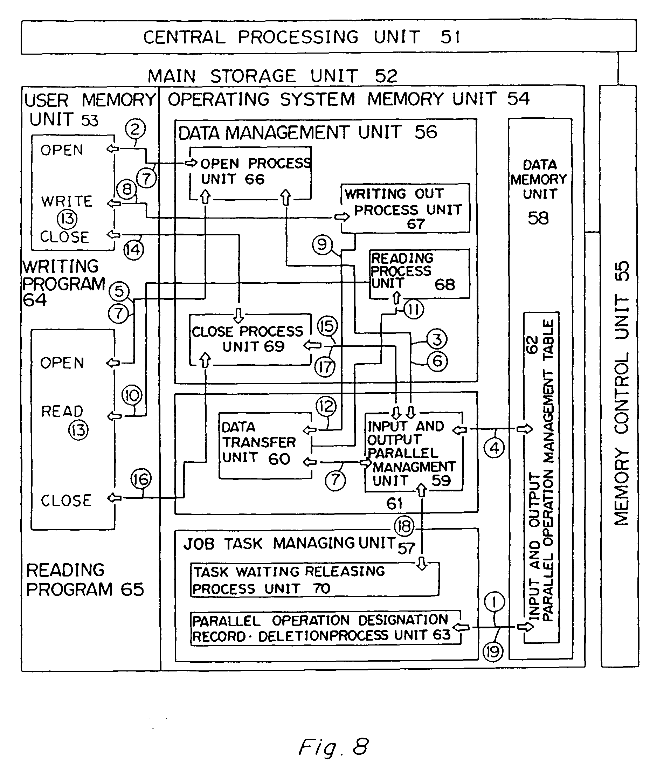

Figure 8 shows a block diagram of an embodiment of a data input/output control system according to the present invention. The main structure of this embodiment is similar to that shown in the block diagram of Figure 7A; writing program 64 and reading program 65 are formed in user memory unit 53 of main storage apparatus 52.

Data management unit 56, which is part of an operating system held in a memory unit 54, comprises open process unit 66, writing out process unit 67, reading process unit 68 and close process unit 69 in a similar manner to the prior art shown in Figure 1. Task waiting state/releasing process unit 70 for controlling the task waiting state and its release is provided in job/task management unit 57 in addition to the previously mentioned parallel designation record/deletion process unit 63.

Operation of this embodiment of the data input/output control system will be explained by reference to Figure 8.

The numbered passages hereinafter correspond respectively to the circled numbers (1) to (19) shown in Figure 8 itself.
(1) In order to be able to execute in parallel manner a file output program, for issuing a data output command relating to a file, and a file input program for issuing a data input command relating to the same file, the name of the file concerned (i.e. the file which is to be the subject of such parallel operation) is at first registered. Thus, when a user, for example, inputs the name of such a file to be the subject of parallel operation, or enters an identification or identifier for identifying the name of the file, from a keyboard (not shown in Figure 8) parallel designation record/deletion process unit 63 in job/task management unit 57 registers or changes the name of the file or the name(s) of file input and/or file output program in input/output parallel management table 62 in data memory 58.
(2) Writing program 64 produced in user memory unit 53 by job/task management unit 57 of an operating system in accordance with an initiation request by the user, executes an initial process (i.e. a sequence previously programmed by the user) and then issues an OPEN command.

The user program may include the same commands OPEN, READ, WRITE or CLOSE which were described in the example shown in Figures 2 and 3 relating to the prior art, and the program need not be changed to work in the present invention.
(3) An open process unit 66 of the operating system's data management unit 56 receives the OPEN command issued by the writing program and then transfers the name of the file designated by the command to input/output parallel management unit 59.
(4) Input/output parallel management unit 59 refers to input/output parallel management table 62 and examines whether the designated file has been registered in advance as being the subject of parallel operation.

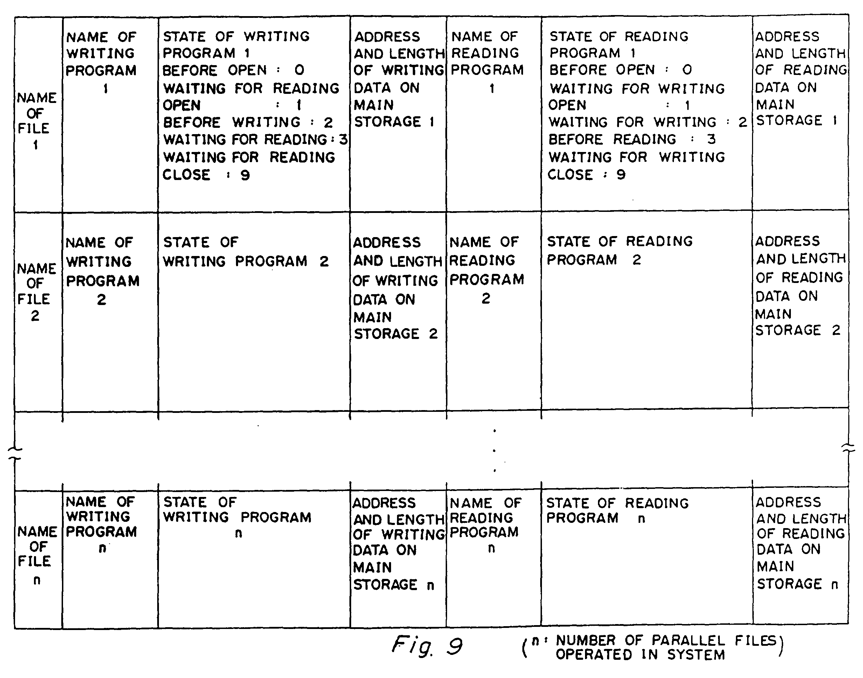

An example of the input/output parallel management table 62 is shown in Figure 9. As shown in Figure 9, for each one of n "parallel operation" files which are now operating in a system, the table 62 registers the name and state of the writing program and reading program which use the file concerned, as well as the address and the length (on the main storage unit) of the data associated with the programs concerned. The different program states will be explained in detail later by referring to an operation flowchart of respective portions.

Input/output parallel management unit 59 examines input/output parallel management table 62 and if, as a result, it finds the name of the file, it sets the state of the writing program and the address and length of the writing data on the main storage and returns control to open process unit 66. However, if the name of the file is not registered in input/output parallel management table 62, input/output parallel management unit 59 notifies open process unit 66 that the file does not exist and open process unit 66 performs the same "open process" as in the prior art, by using the actual input and output apparatus. The details of this conventional "open process" are explained by referring to Figure 2.

If the name of the file is registered in input/output parallel management table 62, open process unit 66 does not yet return the control to writing program 64. However, if the buffer is used, it is possible for control to be returned to writing program 64 to start writing and storing of the writing data in the buffer.
(5) Reading program 65 is produced in a manner similar to (2). It is not always produced simultaneously with the writing program, but may be produced at a time when the writing program is produced. Reading program 65 performs an initiation process and then issues an OPEN command.
(6) When open process unit 66 receives the OPEN command from the reading program, it transfers the filename designated in the command to input/output parallel management unit 59.
(7) Input/output parallel management unit 59 examines input/output parallel management table 62 to confirm that the file name exists and then sets the state of the reading program and the address of the reading data in the main storage unit in input/output parallel management table 62 and notifies open process unit 66 that the correspondence between the writing and reading is completed, whereafter control is returned to open process unit 66. At this time, open process unit 66 returns the control to both writing and reading programs 64 and 65.

Therefore, either operation (2) or operation (5) may be performed earlier than the other.
(8) Writing program 64 prepares its data and issues a WRITE command.
(9) Writing process unit 67 notifies data transfer unit 60 that it has received writing data but has not yet returned the control to writing program 64.
(10) Reading program 65 issues a READ command requesting reading of data.
(11) Reading process unit 68, having received the READ command, requests data transfer unit 60 to transfer the data.
(12) Data transfer unit 60 transfers the writing data stored in the main storage by writing program 64 to the reading data area on the main storage for reading program 65. Thereafter, data transfer unit 60 notifies both writing process unit 67 and reading process unit 68 of the completion of the transfer.
(13) Control is returned to reading program 65 and writing program 64 to proceed to the next process. If there is a plurality of data, the above steps (8) to (13) are repeated.
(14) When writing program 64 has written all the data to be written, it issues a CLOSE command.
(15) Close process unit 69 receives this command and notifies input/output parallel management unit 59 of this command. Input/output parallel management unit 59 updates the writing program state in input/output parallel management table 62. Thereafter, input/output parallel management unit 59 returns the control to writing program 64 through close process unit 69.
(16) After writing program 64 has issued the CLOSE command, when the next READ command is issued by reading program 65, the data end (EOF) is notified. When reading program 65 receives such data end notification or completes reading of all of the data to be read, it issues a CLOSE command.
(17) Close process unit 69 receives this command and notifies the input/output parallel management unit 59 of receipt of the CLOSE command from the reading program. Input/output parallel management unit 59 updates the reading program state in input/output parallel management table 62 or deletes information such as the program name. Input/output parallel management unit 59 returns the control to reading program 65 through close process unit 69.
(18) While input/output parallel management unit 59 performs the above process, task waiting/releasing process unit 70 determines, based on the state of input/output parallel management table 62, whether the control may be returned to writing program 64 and reading program 65, which are the tasks. As a result, input/output parallel management unit 59 performs a process of keeping the task waiting or releasing the waiting state of the task.
(19) As recited above, once execution of writing program 64 and reading program 65 is completed, parallel designation record/deletion process unit 63 deletes the file name and so on from input/output parallel management table 62 in accordance with the content inputted by the user through the keyboard as shown in (1).

If the user instructs, by using the job control language, that the following program should be initiated automatically job/task management unit 57 automatically initiates the designated following program, when writing and reading programs 64 and 65 are completed after issuing a RETURN command. However, if writing program 64 does not reach the end in a normal manner because of an error in the program or the given data, or because an "execution stop" instruction is given by an operator, i.e. if the process ends in an abnormal manner, reading program 65 is concurrently made to end in an abnormal manner. Conversely, where reading program 65 ends in an abnormal manner, writing program 64 is also made to end in an abnormal manner. Two programs which are in an input and output relationship with regard to the same file are executed concurrently as a result of the parallel control according to the present invention and in many cases it is expected that the two programs will end almost simultaneously.

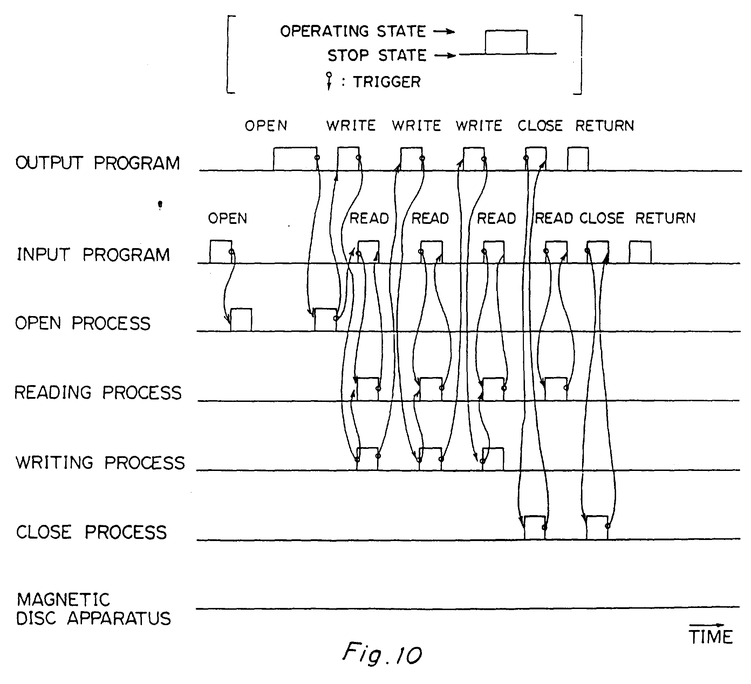

Figure 10 shows a timing chart of the operation of the Fig. 8 system for comparison with the prior art timing chart shown in Figure 4. From Figure 10 the actual timing of the parallel process and the decrease in the time period necessary for execution become clear.

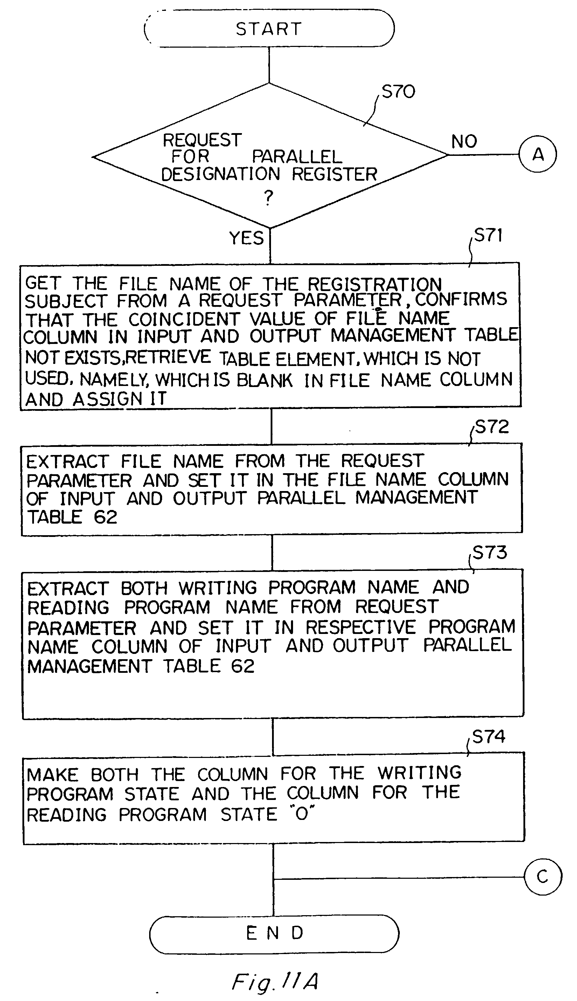

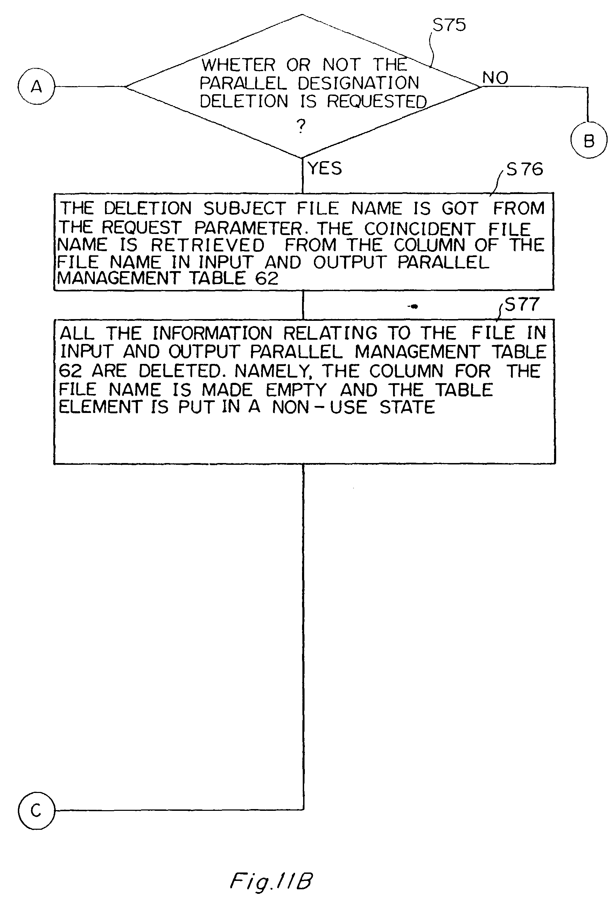

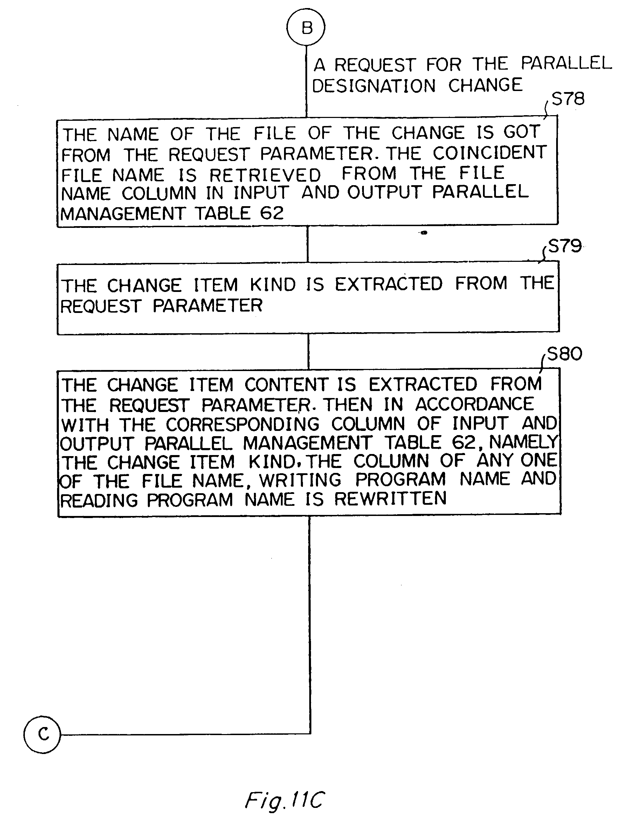

Figures 11A to 11C show detailed flowcharts of the parallel designation record/deletion process. The process corresponds to (1) and (19) in Figure 8. When the process starts, S70 judges whether or not a parallel designation registration is requested. In case of such a registration request, in S71, the file name to be registered is got from a request parameter, namely information transmitted when the user program issues a macro command. Then, it is confirmed that the same or coincident name does not already exist in the "file name" column of input/output parallel management table 62 and, if so, an unused element of the table is assigned to the file name.

Next, in S72, the file name is extracted from the request parameter and is set in the file name column of input/output parallel management table 62. In S73, both writing program name and reading program name are extracted and are set in respective program name columns of input/output parallel management table 62. Thereafter, in S74, both the column for the writing program state and the column for the reading program state are set to "0", namely "before-open", and the process ends.

If S70 judges that the process is not a registration request, S75 judges whether or not a parallel designation deletion is requested. If it is, the file name to be deleted is got from the request parameter in S76. The coincident file name is retrieved from the column of the file name in input/output parallel management table 62. Next, in S77, all the information relating to the file in input/output parallel management table 62 is deleted. Namely, in S77, the column for the file name is made empty and the table element is put in a non-use state, whereafter the process ends.

Where S70 determines that a registration is not requested and S75 determines that a deletion is not requested, the request is deemed to be a request for parallel designation change. In S78, the name of the file which is the subject of the change is got from the request parameter in S78 and the coincident file name is retrieved from the file name column in input/output parallel management table 62. Next, in S79, the type of the item to be changed is extracted from the request parameter and in S80, the new content of the item is extracted from the request parameter. Then, the corresponding column of input/output parallel management table 62 (file name column or writing program name column or reading program name column) is rewritten in accordance with the type of item specified in the request, and the process then ends.

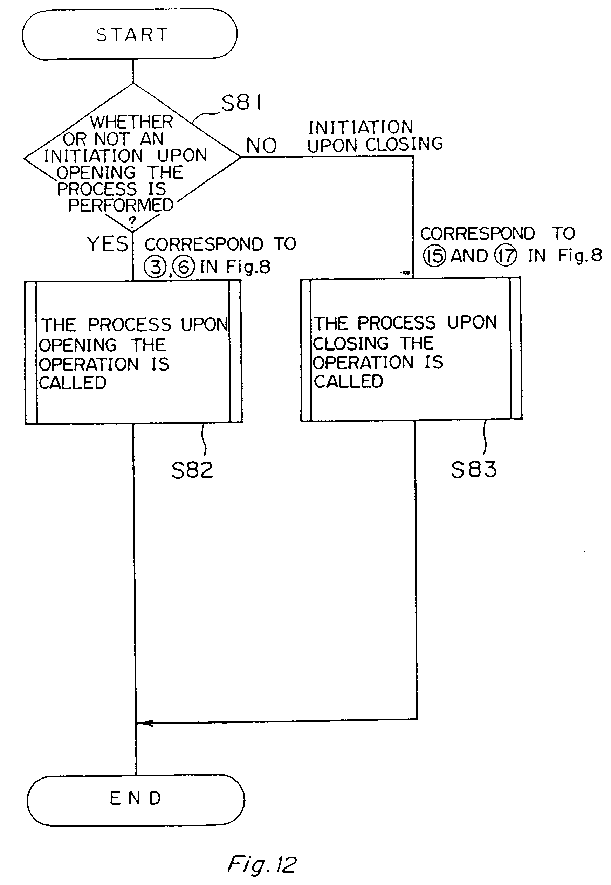

Figure 12 is an operation flowchart of input/output parallel management unit 59. When the process starts, S81 judges whether or not to initiate an opening process. In a case of an opening process initiation, execution corresponds to (3) and (6) in Figure 8, and S82 calls the opening process and then ends. Where such an opening process is not involved an initiation of a closing process is performed. Thus, in this case execution is made to correspond to (15) and (17) in Figure 8 and S83 calls the closing process, and then ends.

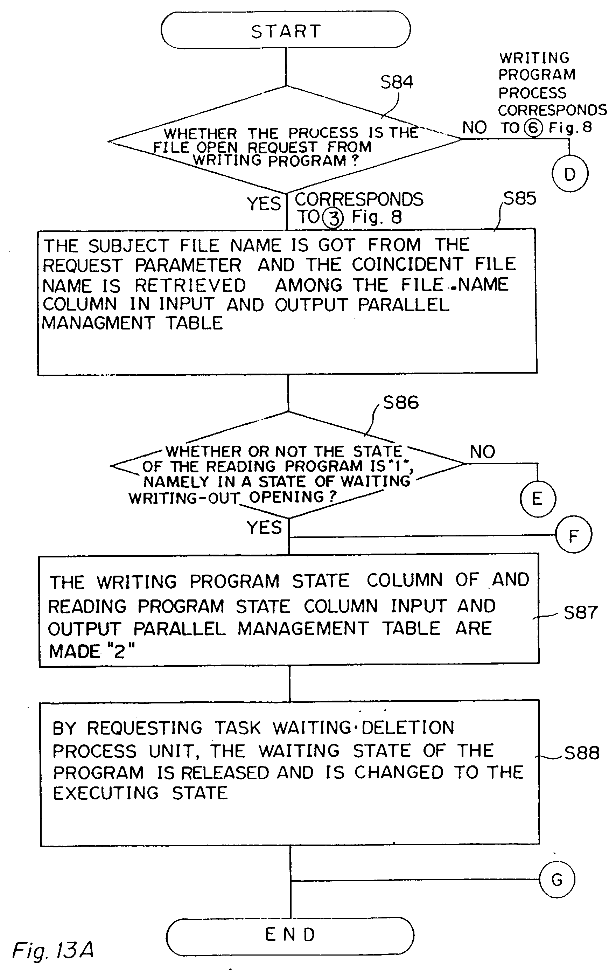

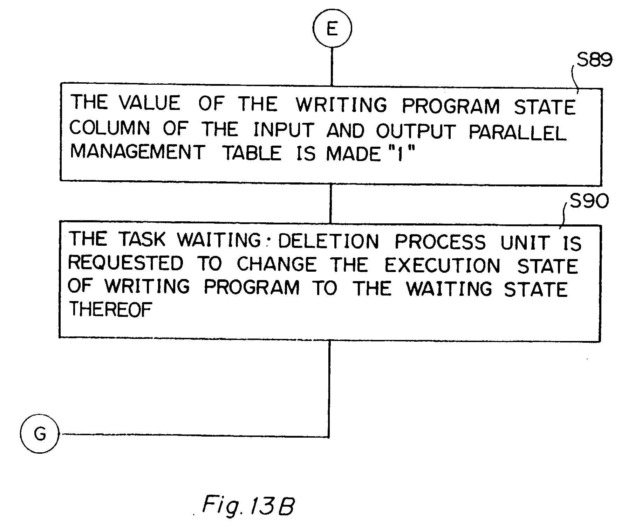

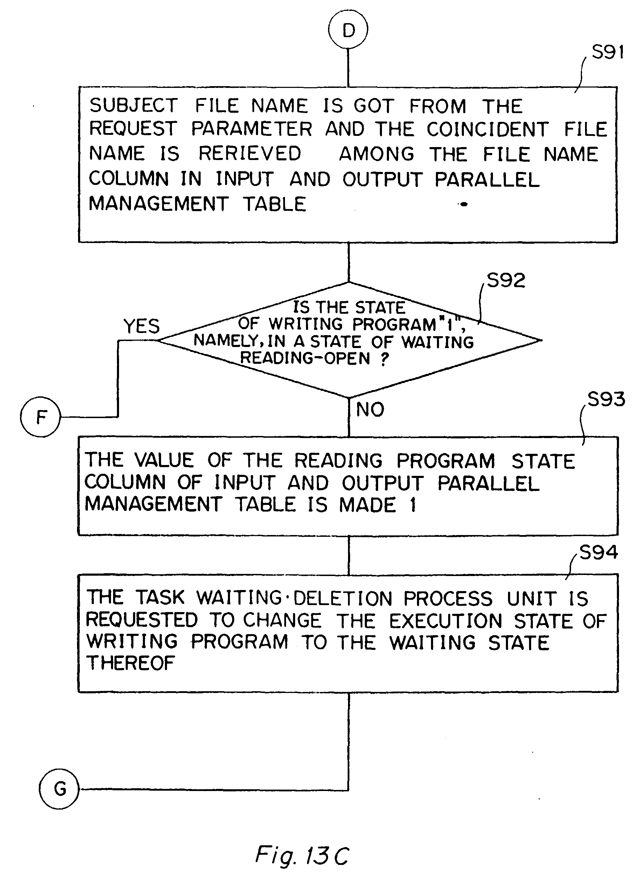

The detailed flowchart of this opening process is shown in Figures 13A to 13C. When the process in Figure 13A starts, S84 determines whether or not the process relates to a file open request from writing program 64 and in the case of such a request from writing program 64 (i.e. where execution corresponds to (3) in Figure 8), the subject file name is got from the request parameter in S85 and the coincident file name is found among the stored file names in the relevant column in input/output parallel management table 62.

Next, in S86 it is judged whether or not the reading program registered as using the retrieved file name is in state "1", which means that the program is in a state of waiting for writing opening. This "writing open waiting" state signifies that the file has already been opened by the reading program. If the "writing open waiting" state is detected, S87 sets the writing program state column of input/output parallel management table 62 to "2", signifying the "before-writing" state, and sets the reading program state column of input/output parallel management table 62 to "2", signifying the "writing waiting" state, thereby completing preparation for the data transfer. Then, in S88, the task waiting/releasing process unit 70 is requested to release the waiting state of the reading program, i.e. the state in which the program is not got by the CPU and is not executed, and the reading program is changed to the executing state, i.e. the state in which the program is got and executed by the CPU. The opening process then ends.

Where the reading program state is not "waiting for writing opening" in S86, i.e. the file has not yet been opened, processing advances to S89 in which the value of the writing program state column of input/output parallel management table 62 is set to "1", signifying the "reading open waiting" state, and the task waiting/releasing process unit 70 is requested to change the execution state of the writing program 64 to the waiting state thereof in S90, thereby ending the opening process.

Where the request is not found to be a request from writing program 64 in S84, the execution corresponds to the request from reading program 65, namely (6) in Figure 8, and in S91 the subject file name is retrieved from input/output parallel management table 62 in a similar manner to S85. Next, S92 judges whether or not writing program is in state "1", namely the "reading open waiting" state, and, if it is in the "reading open waiting state", S87 and S88 are executed as preparation for the data transfer, thereby ending the process.

Where the state of the writing program is not "reading open waiting" in S92, the file is not yet opened by the writing program. Thus, in S93, the value of the reading program state column is made "1", namely "writing-open waiting", in a similar manner to S89 and S90. In S94, the task waiting/releasing process unit 70 is requested to change the execution state of the reading program to the waiting state in S94, thereby ending the process.

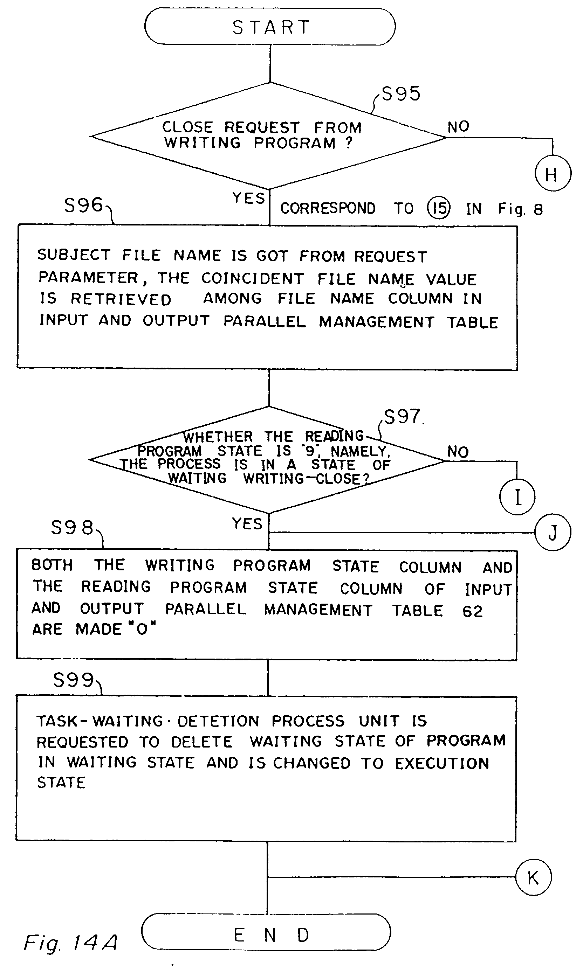

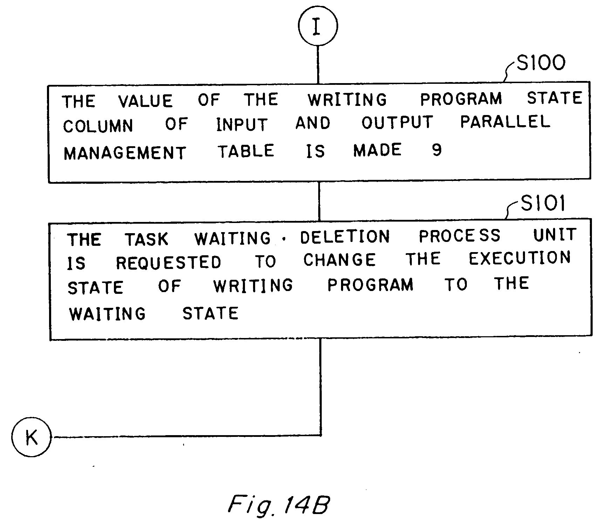

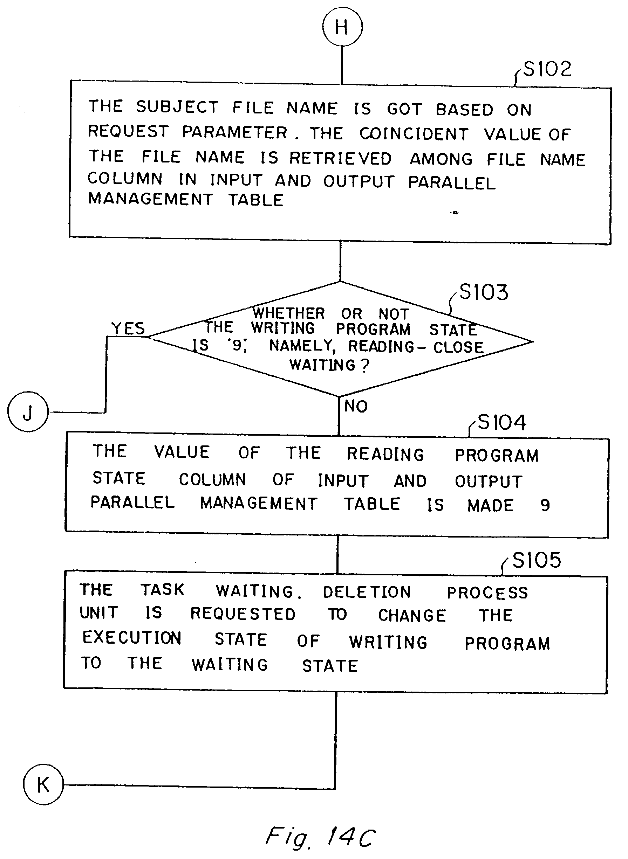

Figures 14A to 14C show detailed flowcharts of the closing process. The flowchart is similar to the opening process shown in Figures 13A to 13C. When the process starts, at first S95 judges which program the request is issued from, in a similar manner to S84 in Figure 13A. When the request is from the writing program 64, execution corresponds to (15) in Figure 8 and the file name column of input/output parallel management table 62 is searched to find the subject file name in S96 in a similar manner to S85.

Next, S97 determines whether or not the reading program state is "9", signifying that the program is in a state of waiting for a writing-close operation. If it is waiting for a writing-close operation, a file close from the reading program 65 side has already been completed. In S98 both the writing program state column and the reading program state column of input/output parallel management table 62 are set to "0", i.e. the "before-opening" state. In S99, the reading program 65, which is in the waiting state, is requested to be changed to the execution state by task waiting/releasing process unit 70, thereby ending the closing process.

In S97, if the reading program is not in the "waiting for a writing-close" state, closure of the file has not yet been performed on the reading program side and in S100 the value of the writing program state column in the input/output parallel management table 62 is set to "9", i.e "the reading close waiting" state. In S101, the task waiting/releasing process unit 70 is requested to change the execution state of writing program 64 to the waiting state thereof, thereby ending the closing process.

In S95, if the close request is from reading program 65, execution corresponds, to (17) in Figure 8, and in S102 the file name column of input/output parallel management table 62 is searched through in a similar manner to S96, and S103 judges whether or not the writing program state is "9", i.e. the "waiting for a reading close" state. This "reading close waiting state" means that data transmission is completed, and the closing process ends after executing S98 and S99. In S103, if the writing program is not in the "reading close waiting" state, this means that the file closure has not yet been carried out by the writing program side and, in S104, the value of the reading program state column of input/output parallel management table 62 is set to "9", signifying a "writing close waiting" state. In S105, task waiting/releasing process unit 70 is requested to change the execution state of reading program 65 to the waiting state thereof in S105, thereby ending the closing process.

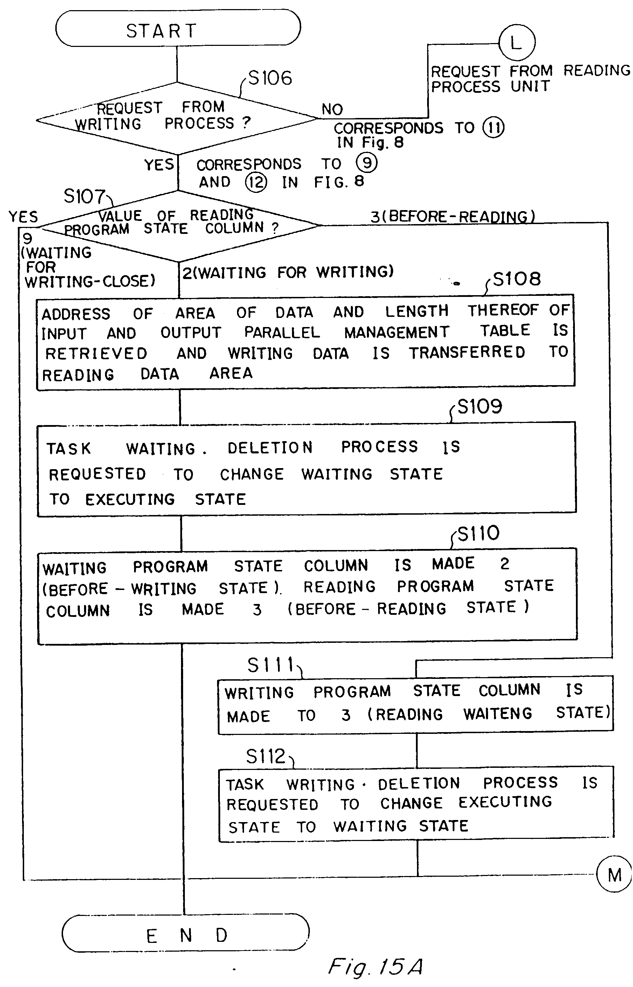

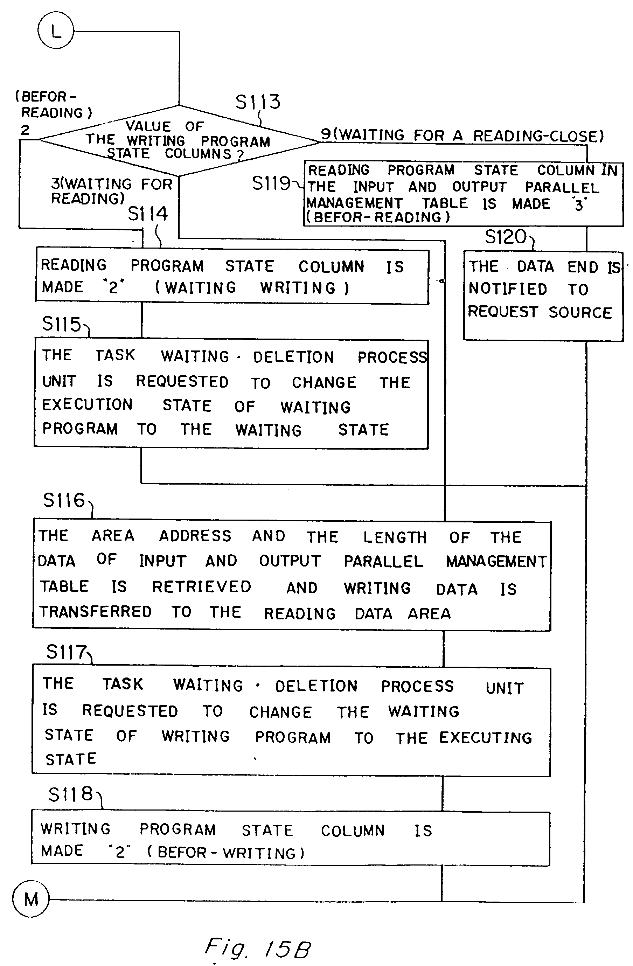

Figures 15A and 15B show detailed flowcharts of the data transfer process when the data transfer process corresponding to (12) of Figure 8 starts. S106 judges whether or not the process is a transfer request from writing process unit 67. If it is, namely, if it corresponds to operations (9) and (12) in Figure 8, S107 determines the value of the reading program state column of input/output parallel management table 62. If the value of the reading program state column is "2", i.e. the reading program is in the "waiting for writing" state, this means that the reading program side is ready to receive the data. In S108, to obtain the address of the data area and the length thereof, input/output parallel management table 62 is referred to and the writing data is transferred to the reading data area. Next, S109 requests task waiting/releasing process unit 70 to change reading program from the waiting state to the executing state. In S110, the writing program state column of input/output parallel management table 62 is set to "2", i.e. the "before-writing" state, and the reading program state column is set to "3", i.e. the "before-reading" state, thereby completing the data transfer process.

If S107 finds the value of the reading program state column to be "3", i.e. the reading program is in the "before-reading" state, the reading program is not ready to receive the transfer data. Thus, S111 sets the writing program state column to "3", i.e. to a "waiting for reading" state. Then, S112 requests task waiting/releasing process unit 70 to change the writing program 64 from an executing state to a waiting state, thereby completing the data transfer process.

In S107, when the reading program state column is found to be "9", i.e. in a "waiting for writing close" state, this signifies that the reading program side has completed reading of all the data to be read, has closed the file and is waiting for the file to be closed by the writing program side. Therefore, the data transfer request from writing process unit 67 is disregarded and nothing is executed, thereby ending the process.

When S106 judges that the data transfer request came from reading process unit 68, i.e. execution corresponds to (11) in Figure 8, S113 determines the value of the writing program state column in input/output parallel management table 62. When the value is "2", signifying the "before-writing" state, this means that writing program has not yet written data into the file and thus the reading program state column is set to "2", i.e. the "before-writing" state in S114, and task waiting/releasing processing unit 70 is requested to change reading program 65 from the executing state to the waiting state, thereby completing the process.

If S113 judges that the writing program state column has the value "3", i.e. the writing program is in the "waiting for reading" state, this signifies that the completion of the data transfer operation, and S116 refers to the area address and the length of the data of input/output parallel management table 62 and writing data is transferred to the reading area. Thereafter, S117 requests the task waiting/releasing process unit 70 to change the waiting writing program from the state to the executing state, and S118 sets the writing program state column of input/output parallel management table 62 to "2", i.e. "before-writing" state, thereby ending the process.

When the writing program state column has the value "9" i.e. the writing program is in the "waiting for a reading close" state in S113, this means that all of the data to be written has already been written by the writing program side, and in S119 the reading program state column of the input/output parallel management table 62 is set to "3", i.e. the "before-reading" state, and in S120 the data end is notified to reading process unit 68, which is the source of the data transfer request, thereby ending the process.

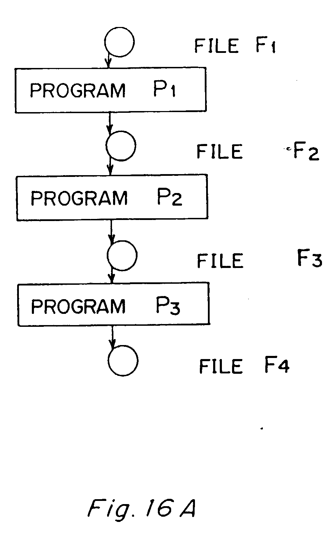

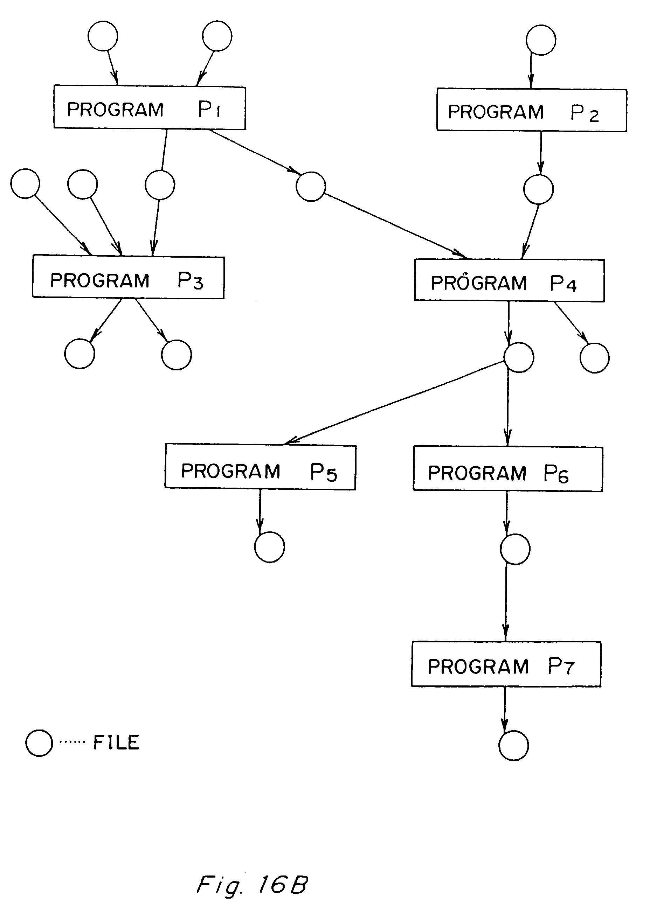

The control method described above is used to enable parallel data input and output between two programs comprising one writing program and one reading program, but a control method embodying the present invention can also be applied among three or more programs. Figure 16A shows an example in which the present control method is applied to three programs and Figure 16B shows an example in which the present control method is applied to many programs. As shown in Figure 16A, while program P2 receives the data from file F2 which is outputted from program P1, program P2 simultaneously outputs the data to file F3, in which program P3 is inputted. Namely, parallel processing is conducted. Figure 16B shows a parallel processing of the data input and output which is performed among many programs.

Generally speaking, a sequence relation of the batch program for two programs is determined based on the data output (file formation) to the file to be used and the data input (file use) from the file. Generally speaking, the input side need not read all of the data in the file and can read full input records or characters thereof one by one in a divided manner, and the output side can write out one output record or character. Only a small number of programs, such as sort programs, have contrary characteristics. Therefore, a data input/output control system embodying the present invention may be applied widely to conventional batch type programs.

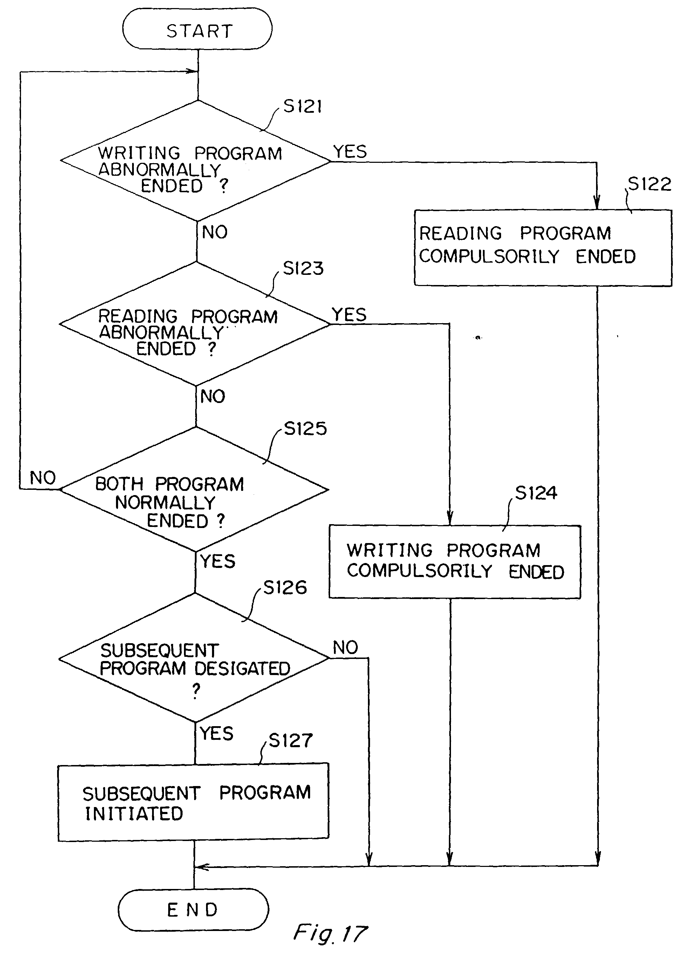

Figure 17 shows a flowchart of an example in which the writing program or reading program performs an abnormal end. In performing a parallel processing of the writing program and reading program, S121 judges whether or not the writing program ends abnormally because of an error in the program or data or because of an execution stop designation by an operator and, when such an abnormal end occurs, the reading program subjected to the parallel processing is compulsorily ended in S122, thereby ending the process.

If S121 judges that an abnormal end of the writing program has not occurred, S123 judges whether or not the reading program performs an abnormal end and, where such an abnormal end happens, the writing program subjected to the parallel processing is compulsorily ended in S124, thereby ending the process. When an abnormal end does not occur in S123, S125 judges whether both writing and reading programs perform a normal ending, are executed until the last point and whilst the process is not yet ended, the steps starting with S121 are repeated.

Where S125 judges that both programs subjected to parallel processing end in a normal manner, S126 judges whether or not a following program has been designated by the user using the job control language. Where no such designation has been made, then the process ends naturally, and where such designation has been made, the subsequent program is initiated in S126 and thereafter the process ends.

As described above, according to the present invention, even if written for use in a conventional batched type data input/output control system, the file output program and the file input program for processing the file can be subjected to parallel processing without changing or converting the programs, thereby drastically decreasing the operation time. The input and output can be conducted by transferring the data from a main storage unit or using buffers in place of using an input and output apparatus such as the actual magnetic disc apparatus and magnetic tape apparatus, thereby further decreasing the execution time and decreasing the load of the central processing unit during input and output operations. Therefore, the computer operating time and the operator labour can be greatly decreased in an enterprise using computers, thereby achieving a great cost saving.

Further, the program may be divided so that a function can be divided into a plurality of processes and the program can still be executed with a high performance. Therefore, the function can be positively divided into smaller portions upon developing the program, thereby achieving higher flexibility and freedom in developing the program. Therefore, development of the software can be divided into many assignments and the software can be more extensively used as parts, thereby achieving an increase in software productivity.

## Claims

1. Computing apparatus having batch-type data input/output control means operable to execute a file output program (64) for outputting data from a main storage unit (52) of the apparatus to an external storage unit (11) connected with the apparatus when it is in use, the file output program (64) designating a predetermined file of the external storage unit for the storage of the output data, and also operable to execute a file input program (65) for inputting data into the main storage unit (52) from a predetermined file (12) of the external storage unit designated by the file input program and for processing such input data;
the said data input/output control means being controlled by an operating system of the apparatus which comprises:
a data management unit (56) for controlling such outputting and inputting of data;
a job/task management unit (57) operable in response to a job statement, written in a job control language and specifying jobs or job steps to be executed one after the next by the operating system, to control initiation, waiting and termination of programs associated with the specified jobs or job steps; and
a data memory unit (10) for use by the operating system when the job/task management unit (57) and the data management unit (56) cause such a file output program or such a file input program to be executed;
characterised in that the said operating system further comprises:
an input/output parallel management unit (59) having means for registering at least one program pair, which pair is made up of respective such file output and file input programs (64, 65) that designate the same file, and operable, following initiation of both programs of such a registered program pair by the job/task management unit (57) in accordance with such a job statement, to cause the file input program (65) of the pair to be executed in parallel with the file output program (64) of the pair without being kept waiting until execution of the file output program (64) is completed; and
an input/output parallel control unit (61), including a data transfer unit (60), and operable under the control of the said input/output parallel management unit (59) to employ the main storage unit (52) to transfer data output by the file output program (64) to the file input program (65) of such a program pair during such parallel execution of the two programs, without passing that data through such an external storage unit (11).

2. Computing apparatus as claimed in claim 1, wherein the file output and file input programs (64, 65) making up the or each such program pair are designated by a further program, other than the file output and file input programs (64, 65), or by a user of the apparatus, and the said operating system further comprises an input/output parallel management table (62) for registering the respective names of the file output program (64) and file input program (65) of the or each such program pair;
the said job/task management unit (57) including a parallel designation register/deletion processing unit (63) operable, in accordance with a request made by such a further program or by such a user, to change the contents of the said input/output parallel management table (62).

3. Computing apparatus as claimed in claim 2, wherein the said input/output parallel management table (62) is stored in the said data memory unit (10) and further registers, for the or each such program pair, the following parameters:
the storage address and length in the main storage unit (52) of the data output by the file output program (64);
the storage address and length in the main storage unit (52) of the data to be input by the file input program (65);
an operating state of the file output program selected from a before-open state, a state of waiting for reading-open, a before-writing state, a state of waiting for reading, and a state of waiting for reading-close; and
an operating state of the file input program (65) selected from a before-open state, a state of waiting for writing-open, a state of waiting for writing, a before-reading state and a state of waiting for writing-close.

4. Computing apparatus as claimed in claim 3, wherein the said data management unit (56) comprises an open process unit (66) operable, when a file output program (64) or file input program (65) is loaded into a user memory portion (53) of the main storage unit (52) by the said job/task management unit (57) in accordance with such a job statement, to receive from the program concerned an open command, and to transmit to the said input/output parallel management unit (59) the name of the file designated by the received open command.

5. Computing apparatus as claimed in claim 4, wherein the said input/output parallel management unit (59) is operable to determine whether the file name transmitted thereto by the said open process unit (66) is one which has been registered in the said input/output parallel management table (62) and, if so, to set in the input/output parallel management table the said operating state of the program that issued the open command, and the storage address and the length in the main storage unit of the data for that program, whereafter control is returned to the said open process unit (66), but if the file name is not one which has been so registered in the said input/output parallel management table (62), the input/output parallel management unit (59) is operable to notify the open process unit (66) of this fact, so that when an unregistered file is designated by the program in such an open command the file input program (65) designating that file is executed only after completion of the file output program (64) designating that file and not in parallel therewith.

6. Computing apparatus as claimed in claim 5, wherein, when both programs of such a registered program pair have issued such an open command and, in accordance with the respective open commands, the input/output parallel management unit (59) has set in the said input/output parallel management table (62) the operating state, data storage address and data length in the main storage unit of both programs of the pair, the input/output parallel management unit returns control to the open process unit (66) together with a notification that the correspondence arrangements for the two programs of the pair are complete, and the open process unit (66) returns control to the file output program (64) and the file input program (65) of the pair.

7. Computing apparatus as claimed in claim 5 or 6, wherein the said data management unit (56) comprises a writing process unit (67) operable to receive a WRITE command issued by the said file output program (64) after control is returned thereto by the said open process unit (66), and to notify the said data transfer unit (60) in the said input/output parallel control unit (61) of receipt of such a WRITE command.

8. Computing apparatus as claimed in claim 5, 6 or 7, wherein the said data management unit (56) comprises a reading process unit (68) operable to receive a READ command, requesting reading of data, issued by the said file input program (65) after control is returned thereto by the said open process unit (66), and to notify the said data transfer unit (60) in the said input/output parallel control unit (61) of receipt of such a READ command.

9. Computing apparatus as claimed in claim 7, wherein, when the said data transfer unit (60) is notified by the said writing process unit (67) of receipt of such a WRITE command from the file output program of such a registered program pair, the input/output parallel management unit (59) checks the input/output parallel management table (59) to determine whether the file input program (65) of the pair is in the said state of waiting for writing and, if so, causes the data transfer unit (60) to transfer output data stored in the main storage unit (52) by the file output program (64) to a reading area of the main storage unit (52) allocated to that file input program (65).

10. Computing apparatus as claimed in claim 8, wherein, when the said data transfer unit (60) is notified by the said reading process unit (68) of receipt of such a READ command from the file input program of such a registered program pair, the input/output parallel management unit (59) checks the input/output parallel management table (62) to determine whether the file output program (64) of the pair is in the said state of waiting for reading and, if so, causes the data transfer unit (60) to transfer output data stored in the main storage unit (52) by that file output program (65) to a reading area of the main storage unit (52) allocated to the file input program (65).

11. Computing apparatus as claimed in claim any one of claims 4 to 10, wherein the said data management unit (56) comprises a close process unit (69) operable to receive a close command issued by the said file output program when all of the data to be output thereby has been output, or a close command issued by the file input progam (65) when data input is completed thereby or when a data end notification (EOF) has been produced following issuance of a close command by the file output program (64) of the program pair, and operable to notify the input/output parallel management unit (59) of receipt of such a close command.

12. Computing apparatus as claimed in claim 11, wherein, when the said input/output parallel management unit (59) is notified of the receipt of the close command, it is operable to update the said operating state, held in the said input/output parallel management table (62), of the program which issued the command and to return control to that program via the said close process unit (69).

13. Computing apparatus as claimed in any one of claims 3 to 12, wherein:
the said input/output parallel management unit (59) is operable during such parallel execution of the two programs of a registered program pair to determine, based on the respective said operating states of the two programs as recorded in the input/output parallel management table (62), whether control is to be returned to each program of the pair as a task; and
the said job/task management unit (57) comprises a task waiting/releasing process unit (70) operable to perform waiting and waiting-releasing operations in relation to the tasks concerned.

14. Computing apparatus as claimed in any preceding claim, wherein the said job/task management unit (57) is operable, when one program of such a registered program pair ends abnormally during such parallel execution of the two programs, to cause the other program of the pair to end simultaneously in an abnormal state, whereas when both programs of the pair end normally and a subsequent program has been designated for execution by a user using such a job statement the job/task management unit (57) is operable to initiate the designated subsequent program automatically.

15. Computing apparatus as claimed in any preceding claim, having a plurality of such operating systems.

## Patentansprüche

1. Computergerät mit einer Daten-Eingabe-/-Ausgabesteuereinrichtung vom Stapeltyp, die betreibbar ist, um ein Dateiausgabeprogramm (64) für die Ausgabe von Daten aus einer Hauptspeichereinheit (52) des Gerätes zu einer externen Speichereinheit (11), die an das Gerät angeschlossen ist, auszuführen, wenn es in Verwendung ist, wobei das Dateiausgabeprogramm (64) eine vorbestimmte Datei der externen Speichereinheit für die Speicherung der Ausgabedaten bezeichnet, und welches auch so betreibbar ist, um ein DateiEingabeprogramm (65) für die Eingabe von Daten in die Hauptspeichereinheit (52) von einer vorbestimmten Datei (12) der externen Speichereinheit aus vorzunehmen, die durch das Dateieingabeprogramm bezeichnet ist, und um solche Eingabedaten zu verarbeiten;
wobei die Daten-Eingabe-/-Ausgabesteuereinrichtung durch ein Betriebssystem des Gerätes steuerbar ist, welches aufweist:
eine Daten-Managementeinheit (56) zum Steuern einer solchen Ausgabe und Eingabe von Daten;
eine Job/Task-Managementeinheit (57), die in Abhängigkeit von einer Auftragsanweisung, die in einer Auftragssteuersprache geschrieben ist, betreibbar ist und die Aufträge oder Auftragsschritte, welche einer nach dem anderen durch das Betriebssystem auszuführen sind, spezifiziert, um die Initialisierung, das Warten und die Beendigung der Programme, die den spezifischen Aufträgen oder Auftragsschritten zugeordnet sind, zu steuern; und
eine Datenspeichereinheit (10) für die Verwendung durch das Betriebssystem, wenn die Job/Task-Managementeinheit (57) und die Daten-Managementeinheit (56) veranlassen, daß ein solches Dateiausgabeprogramm oder ein solches Dateieingabeprogramm ausgeführt wird;
dadurch **gekennzeichnet**, daß das Betriebssystem ferner aufweist:
eine Eingabe-/Ausgabe-Parallel-Managementeinheit (59) mit einer Einrichtung zum Registrieren von wenigstens einem Programmpaar, welches Paar aus jeweiligen solchen Dateiausgabe- und Dateieingabeprogrammen (64, 65) zusammengesetzt ist, welche die gleiche Datei bezeichnen, und welche betreibbar ist, um nachfolgend auf die Initialisierung beider Programme eines solchen registrierten Programmpaares durch die Job/Task-Managementeinheit (57) in Einklang mit einer solchen Auftragsanweisung, das Dateieingabeprogramm (65) des Paares parallel mit dem Dateiausgabeprogramm (64) des Paares ausführen zu lassen, ohne einen Wartezustand der Programme herbeizuführen, bis die Ausführung des Dateiausgabeprogramms (64) vervollständigt ist; und
eine Eingabe-/Ausgabe-Parallel-Steuereinheit (61), die eine Datenübertragungseinheit (60) enthält, und unter der Steuerung der Eingabe-/Ausgabe-Parallel-Managementeinheit (59) betreibbar ist, um die Hauptspeichereinheit (52) zu verwenden, um Daten, die von dem Dateiausgabeprogramm (64) ausgegeben wurden, zu dem Dateieingabeprogramm (65) eines solchen Programmpaares während der parallelen Ausführung der zwei Programme zu übertragen, ohne daß dabei die Daten durch solch eine externe Speichereinheit (11) hindurchgeleitet werden.

2. Computergerät nach Anspruch 1, bei dem die Dateiausgabe- und Dateieingabeprogramme (64, 65), die das oder jedes solches Programmpaar ausmachen, durch ein weiteres Programm bezeichnet sind, welches von den Dateiausgabe- und Dateieingabeprogrammen (64, 65) verschieden ist, oder durch einen Anwender des Gerätes bezeichnet werden und wobei das Betriebssystem ferner eine Eingabe-/Ausgabe-Parallel-Managementtabelle (62) für die Registrierung der jeweiligen Namen des Dateiausgabeprogramms (64) und des Dateieingabeprogramms (65) des oder jedes solchen Programmpaares umfaßt;
die Job/Task-Managementeinheit (57) eine Parallelbezeichnungs-Register/Weglassungs-Verarbeitungseinheit (63) enthält, welche in Einklang mit einer Anfrage, die durch solch ein weiteres Programm oder durch solch einen Anwender geliefert wird, betreibbar ist, um die Inhalte der Eingabe-/Ausgabe-Parallel-Managementtabelle (62) zu ändern.

3. Computergerät nach Anspruch 2, bei dem die Eingabe-/Ausgabe-Parallel-Managementtabelle (62) in der Daten-Speichereinheit (10) abgespeichert ist und ferner für die oder für jedes solches Programmpaar die folgenden Parameter registriert:
die Speicheradresse und die Länge der Daten in der Hauptspeichereinheit (52), die durch das Dateiausgabeprogramm (64) ausgegeben wurden;
die Speicheradresse und die Länge der Daten in der Hauptspeichereinheit (52), die durch das Dateieingabeprogramm (65) einzugeben sind;
einen Betriebszustand des Dateiausgabeprogramms, welches von einem zuvor geöffneten Zustand ausgewählt wird, einem Zustand des Wartens auf ein Lesen-Öffnen, einem Vor-Einschreibzustand, einem Zustand gemäß einem Warten auf Lesen und einem Zustand gemäß einem Warten auf ein Lesen/Schließen; und
einen Betriebszustand des Dateieingabeprogramms (65), ausgewählt aus einem Vor-Öffnungs-Zustand, einem Zustand gemäß einem Warten auf ein Einschreiben-Öffnen, einem Zustand gemäß einem Warten auf Einschreiben, einem Vor-Lesen-Zustand und einem Zustand gemäß einem Warten auf Einschreiben-Schließen.

4. Computergerät nach Anspruch 3, bei dem die Daten-Managementeinheit (56) eine Offenprozeßeinheit (66) umfaßt, die dann, wenn ein Dateiausgabeprogramm (64) oder ein Dateieingabeprogramm (65) in einen Anwender-Speicherabschnitt (53) der Hauptspeichereinheit (52) durch die Job/Task-Managementeinheit (57) in Einklang mit einer solchen Auftragsanweisung geladen wird, betreibbar ist, um von dem in Betracht stehenden Programm einen Öffnungsbefehl zu empfangen und um den Namen der Datei, die durch den empfangenen Öffnungsbefehl bezeichnet ist, zu der Eingabe-/Ausgabe-Parallel-Managementeinheit (59) zu senden.

5. Computergerät nach Anspruch 4, bei dem die Eingabe-/Ausgabe-Parallel-Managementeinheit (59) betreibbar ist, um zu bestimmen, ob der zu dieser durch die Offenprozeßeinheit (66) gesendete Dateiname ein solcher ist, der in der Eingabe-/Ausgabe-Parallel-Managementtabelle (62) registriert wurde, und, wenn dies der Fall ist, in die Eingabe-/Ausgabe-Parallel-Managementtabelle den Betriebszustand des Programms, welches den öffnungsbefehl ausgegeben hat, zu setzen und um die Speicheradresse und die Länge der Daten für dieses Programm in der Hauptspeichereinheit zu setzen, woraufhin die Steuerung zu der Öffnungsprozeßeinheit (66) zurück übergeben wird, jedoch dann, wenn der Dateiname kein solcher ist, der in der Eingabe-/Ausgabe-Parallel-Managementtabelle (62) registriert wurde, die Eingabe-/Ausgabe-Parallel-Managementeinheit (59) betreibbar ist, um die öffnungsprozeßeinheit (66) über diese Tatsache zu unterrichten, so daß dann, wenn eine nicht registrierte Datei durch das Programm in einem solchen Öffnungsbefehl bezeichnet wird, das Dateieingabeprogramm (65), welches diese Datei bezeichnet, nur nach der Vervollständigung des Dateiausgabeprogramms (64), welches diese Datei bezeichnet, ausgeführt wird und nicht parallel mit diesem ausgeführt wird.

6. Computergerät nach Anspruch 5, bei dem dann, wenn beide Programme solch eines registrierten Programmpaares einen solchen Öffnungsbefehl ausgegeben haben und die Eingabe-/Ausgabe-Parallel-Managementeinheit (59) in Einklang mit den jeweiligen Öffnungsbefehlen den Betriebszustand in die Eingabe-/Ausgabe-Parallel-Managementtabelle (62) gesetzt hat, und die Datenspeicheradresse und die Datenlänge in der Hauptspeichereinheit von beiden Programmen des Programmpaares gesetzt wurden, die Eingabe-/Ausgabe-Parallel-Managementeinheit die Steuerung zu der Öffnenprozeßeinheit (66) zusammen mit einer Mitteilung zurück übergibt, daß die Entsprechungsanordnungen für die zwei Programme des Paares vervollständigt sind und bei dem die Öffnenprozeßeinheit (66) die Steuerung an das Dateiausgabeprogramm (64) und das Dateieingabeprogramm (65) des Paares zurück übergibt.

7. Computergerät nach Anspruch 5 oder 6, bei dem die Daten-Managementeinheit (56) eine Einschreibprozeßeinheit (67) umfaßt, die betreibbar ist, um einen EINSCHREIB-Befehl zu empfangen, der durch das Dateiausgabeprogramm (64) ausgegeben wurde, nachdem die Steuerung an dieses durch die Öffnenprozeßeinheit (66) zurück übergeben wurde, und um die Datenübertragungseinheit (60) in der Eingabe-/Ausgabe-Parallel-Managementeinheit (61) über den Empfang eines solchen EINSCHREIB-Befehls zu unterrichten.

8. Computergerät nach Anspruch 5, 6 oder 7, bei dem die Daten-Managementeinheit (56) eine Leseprozeßeinheit (68) umfaßt, die betreibbar ist, um einen LESE-Befehl zu empfangen, die das Lesen von Daten anfragt, die durch das Dateieingabeprogramm (65) ausgegeben wurden, nachdem die Steuerung an diese durch die Öffnenprozeßeinheit (66) zurückgegeben wurde, und um die Datenübertragungseinheit (60) in der Eingabe-/Ausgabe-Parallel-Managementeinheit (61) über den Empfang eines solchen LESE-Befehls zu unterrichten.

9. Computergerät nach Anspruch 7, bei dem dann, wenn die Datenübertragungseinheit (60) durch die Einschreibprozeßeinheit (67) über den Empfang eines solchen EINSCHREIB-Befehls von dem Dateiausgabeprogramm eines solchen registrierten Programmpaares unterrichtet wird, die Eingabe-/Ausgabe-Parallel-Managementeinheit (59) die Eingabe-/Ausgabe-Parallel-Managementtabelle (59) überprüft, um zu bestimmen, ob das Dateieingabeprogramm (65) des Paares sich in dem Wartezustand hinsichtlich eines Einschreibens befindet und, wenn dies der Fall ist, die Datenübertragungseinheit (60) veranlaßt, die durch das Dateiausgabeprogramm (64) in der Hauptspeichereinheit (52) gespeicherten Ausgabedaten zu einem Lesebereich der Hauptspeichereinheit (52) zu übertragen, der diesem Dateieingabeprogramm (65) zugeordnet ist.

10. Computergerät nach Anspruch 8, bei dem dann, wenn die Datenübertragungseinheit (60) durch die Leseprozeßeinheit (68) über den Empfang eines solchen LESE-Befehls von dem Dateieingabeprogramm eines solchen registrierten Programmpaares unterrichtet wurde, die Eingabe-/Ausgabe-Parallel-Managementeinheit (59) die Eingabe-/Ausgabe-Parallel-Managementtabelle (62) überprüft, um zu bestimmen, ob das Dateiausgabeprogramm (64) des Paares sich in dem Wartezustand hinsichtlich eines Lesens befindet, und, wenn dies der Fall ist, die Dateiübertragungseinheit (60) veranlaßt, die durch das Dateiausgabeprogramm (65) in der Hauptspeichereinheit (52) gespeicherten Ausgabedaten zu einem Lesebereich der Hauptspeichereinheit (52) zu übertragen, der dem Dateieingabeprogramm (65) zugeordnet ist.

11. Computergerät nach irgendeinem der Ansprüche 4 bis 10, bei dem die Daten-Managementeinheit (56) eine Schließprozeßeinheit (69) umfaßt, die betreibbar ist, um einen Schließbefehl zu empfangen, der durch das Dateiausgabeprogramm ausgegeben wird, wenn all die Daten, die durch dieses auszugeben sind, ausgegeben worden sind, oder einen Schließbefehl zu empfangen, der durch das Dateieingabeprogramm (65) ausgegeben wird, wenn die Dateneingabe dadurch vervollständigt wurde oder wenn eine Daten-Ende-Nachricht (EOF) nachfolgend auf die Ausgabe eines Schließbefehls durch das Dateiausgabeprogramm (64) des Programmpaares erzeugt wurde, und die betreibbar ist, um die Eingabe-/Ausgabe-Parallel-Managementeinheit (59) über den Empfang eines solchen Schließbefehles zu unterrichten.

12. Computergerät nach Anspruch 11, bei dem dann, wenn die Eingabe-/Ausgabe-Parallel-Managementeinheit (59) über den Empfang des Schließbefehls unterrichtet wurde, diese betreibbar ist, um den Betriebszustand des Programms, der in der Eingabe-/Ausgabe-Parallel-Managementtabelle (62) festgehalten ist, auf den neuesten Stand zu bringen, welches Programm den Befehl ausgegeben hat und um die Steuerung über die Schließprozeßeinheit (69) an dieses Programm zurückzuübergeben.

13. Computergerät nach irgendeinem der Ansprüche 3 bis 12, bei dem
die Eingabe-/Ausgabe-Parallel-Managementeinheit (59) während einer solchen parallelen Ausführung von zwei Programmen eines registrierten Programmpaares betreibbar ist, um zu bestimmen, basierend auf den jeweiligen Betriebszuständen der zwei Programme, wie sie in der Eingabe-/Ausgabe-Parallel-Managementtabelle (62) aufgezeichnet sind, ob die Steuerung an jedes Programm des Paares als Task zurückzugeben ist; und
die Job/Task-Managementeinheit (57) eine Task-Warte/Freigabe-Prozeßeinheit (70) umfaßt, die betreibbar ist, um Warte- und Warte-Freigabe-Operationen in bezug auf die in Betracht stehenden Tasks auszuführen.

14. Computergerät nach irgendeinem der vorhergehenden Ansprüche, bei dem die Job/Task-Managementeinheit (57) so betreibbar ist, wenn ein Programm eines solchen registrierten Programmpaares während einer solchen parallelen Ausführung der zwei Programme in anormaler Weise endet, das andere Programm des Paares zu veranlassen, gleichzeitig in einem anormalen Zustand zu enden, während dann, wenn beide Programme des Paares in einer normalen Weise enden und ein nachfolgendes Programm für eine Ausführung durch einen Anwender bezeichnet wurde unter Verwendung einer solchen Auftraganweisung, die Job/Task-Managementeinheit (57) betreibbar ist, um das bezeichnete nachfolgende Programm automatisch zu initialisieren.

15. Computergerät nach irgendeinem der vorhergehenden Ansprüche, welches eine Vielzahl solcher Betriebssysteme aufweist.

## Revendications

1. Appareil informatique comportant des moyens de commande d'entrée/sortie de données du type à traitement par lots, capables d'exécuter un programme de sortie de fichier (64) pour émettre des données à partir d'une unité de mémoire centrale (52) de l'appareil vers une unité de mémoire externe (11) qui est connectée à l'appareil, pendant qu'il est en cours d'utilisation, le programme de sortie de fichier (64) désignant un fichier prédéterminé de l'unité de mémoire externe pour l'enregistrement des données de sortie, et capables également d'exécuter un programme d'entrée de fichier (65) pour introduire des données dans l'unité de mémoire centrale (52) à partir d'un fichier prédéterminé (12) de l'unité de mémoire externe, qui est désigné par le programme d'entrée de fichier, et pour traiter de telles données d'entrée;
les moyens de commande d'entrée/sortie de données étant commandés par un système d'exploitation de l'appareil qui comprend :
une unité de gestion de données (56) pour commander de telles opérations de sortie et d'entrée de données;
une unité de gestion de travaux/tâches (57) pouvant fonctionner sous l'effet d'une instruction de travaux, écrite en un langage de commande de travaux et spécifiant des travaux ou des étapes de travaux à exécuter l'un après l'autre par le système d'exploitation, de façon à commander le lancement, l'attente et la terminaison de programmes associés aux travaux ou aux étapes de travaux spécifiés; et
une unité de mémoire de données (10) prévue pour être utilisée avec le système d'exploitation lorsque l'unité de gestion de travaux/ tâches (57) et l'unité de gestion de données (56) provoquent l'exécution d'un tel programme de sortie de fichier ou d'un tel programme d'entrée de fichier;
caractérisé en ce que le système d'exploitation comprend en outre :
une unité de gestion parallèle d'entrée/sortie (59), comportant des moyens pour enregistrer au moins une paire de programmes, cette paire étant constituée par un programme de sortie de fichier et un programme d'entrée de fichier respectifs (64, 65) qui désignent le même fichier, et pouvant fonctionner, à la suite du lancement des deux programmes d'une telle paire de programmes enregistrée, par l'unité de gestion de travaux/tâches (57), conformément à une telle instruction de travaux, pour commander l'exécution du programme d'entrée de fichier (65) de la paire, en parallèle avec le programme de sortie de fichier (64) de la paire, sans que le programme d'entrée de fichier ne soit maintenu en attente jusqu'à l'achèvement de l'exécution du programme de sortie de fichier (64); et
une unité de commande parallèle d'entrée/sortie (61), comprenant une unité de transfert de données (60), et pouvant fonctionner sous la commande de l'unité de gestion parallèle d'entrée-sortie (59), de façon à employer l'unité de mémoire centrale (52) pour transférer des données émises par le programme de sortie de fichier (64) vers le programme d'entrée de fichier (65) d'une telle paire de programmes, pendant une telle exécution parallèle des deux programmes, sans faire passer ces données par une unité de mémoire externe (11).

2. Appareil informatique selon la revendication 1, dans lequel les programmes de sortie de fichier et d'entrée de fichier (64, 65) qui constituent la paire de programmes, ou chacune d'elles, sont désignés par un programme supplémentaire, autre que les programmes de sortie de fichier et d'entrée de fichier (64, 65), ou par un utilisateur de l'appareil, et le système d'exploitation comprend en outre une table de gestion parallèle d'entrée/sortie (62) pour enregistrer les noms respectifs du programme de sortie de fichier (64) et du programme d'entrée de fichier (65) de la paire de programmes, ou de chacune d'elles;
l'unité de gestion de travaux/tâches (57) comprenant une unité de traitement d'enregistrement/suppression de désignation d'opération parallèle (63) pouvant fonctionner, conformément à une demande effectuée par un tel programme supplémentaire ou par un tel utilisateur, de façon à changer le contenu de la table de gestion parallèle d'entrée/ sortie (62).

3. Appareil informatique selon la revendication 2, dans lequel la table de gestion parallèle d'entrée/sortie (62) est enregistrée dans l'unité de mémoire de données (10) et elle enregistre en outre, pour la paire de programmes ou pour chacune d'elles, les paramètres suivants :
l'adresse d'enregistrement et la longueur dans l'unité de mémoire centrale (52) des données qui sont émises par le programme de sortie de fichier (64);
l'adresse d'enregistrement et la longueur dans l'unité de mémoire centrale (52) des données qui doivent être introduites par le programme d'entrée de fichier (65);
un état fonctionnel du programme de sortie de fichier, sélectionné parmi un état avant ouverture, un état d'attente d'ouverture en lecture, un état avant écriture, un état d'attente de lecture et un état d'attente de fermeture en lecture; et
un état fonctionnel du programme d'entrée de fichier (65), sélectionné parmi un état avant ouverture, un état d'attente d'ouverture en écriture, un état d'attente d'écriture, un état avant lecture et un état d'attente de fermeture en écriture.

4. Appareil informatique selon la revendication 3, dans lequel l'unité de gestion de données (56) comprend une unité de processus d'ouverture (66) pouvant fonctionner, lorsqu'un programme de sortie de fichier (64) ou un programme d'entrée de fichier (65) est chargé dans une partie de mémoire d'utilisateur (53) de l'unité de mémoire centrale (52), par l'unité de gestion de travaux/tâches (57), conformément à une telle instruction de travaux, de façon à recevoir un ordre d'ouverture à partir du programme concerné, et à émettre vers l'unité de gestion parallèle d'entrée/sortie (59) le nom du fichier qui est désigné par l'ordre d'ouverture reçu.

5. Appareil informatique selon la revendication 4, dans lequel l'unité de gestion parallèle d'entrée/sortie (59) peut fonctionner de façon à déterminer si le nom de fichier qui lui est transmis par l'unité de processus d'ouverture (66) est un nom qui a été enregistré dans la table de gestion parallèle d'entrée/sortie (62) et, dans l'affirmative, à placer dans la table de gestion parallèle d'entrée/sortie l'état fonctionnel du programme qui a émis l'ordre d'ouverture, et l'adresse d'enregistrement et la longueur dans l'unité de mémoire centrale des données pour ce programme, après quoi la commande est rendue à l'unité de traitement d'ouverture (66), mais si le nom de fichier n'est pas un nom qui a ainsi été enregistré dans la table de gestion parallèle d'entrée/sortie (62), l'unité de gestion parallèle d'entrée/sortie (59) signale ce fait à l'unité de traitement d'ouverture (66), de façon que lorsqu'un fichier non enregistré est désigné par le programme dans un tel ordre d'ouverture, le programme d'entrée de fichier (65) qui désigne ce fichier ne soit exécuté qu'après l'achèvement du programme de sortie de fichier (64) qui désigne ce fichier, et non en parallèle avec celui-ci.

6. Appareil informatique selon la revendication 5, dans lequel, lorsque les deux programmes d'une telle paire de programmes enregistrée ont émis un ordre d'ouverture et, conformément aux ordres d'ouverture respectifs, l'unité de gestion parallèle d'entrée/sortie (59) a placé dans la table de gestion parallèle d'entrée/sortie (62) l'état fonctionnel, l'adresse d'enregistrement de données et la longueur de données dans l'unité de mémoire centrale des deux programmes de la paire, l'unité de gestion parallèle d'entrée/sortie rend la commande à l'unité de processus d'ouverture (66), conjointement à une notification du fait que les arrangements de correspondance pour les deux programmes de la paire sont entièrement établis, et l'unité de processus d'ouverture (66) rend la commande au programme de sortie de fichier (64) et au programme d'entrée de fichier (65) de la paire.

7. Appareil informatique selon la revendication 5 ou 6, dans lequel l'unité de gestion de données (56) comprend une unité de processus d'écriture (67) capable de recevoir un ordre ECRITURE qui est émis par le programme de sortie de fichier (64), après que la commande lui a été retournée par l'unité de processus d'ouverture (66), et de notifier la réception d'un tel ordre ECRITURE à l'unité de transfert de données (60) dans l'unité de commande parallèle d'entrée/sortie (61).

8. Appareil informatique selon la revendication 5, 6 ou 7, dans lequel l'unité de gestion de données (56) comprend une unité de processus de lecture (68) capable de recevoir un ordre LECTURE, demandant la lecture de données, qui est émis par le programme d'entrée de fichier (65), après que la commande lui a été rendue par l'unité de processus d'ouverture (66), et de notifier la réception d'un tel ordre LECTURE à l'unité de transfert de données (60) dans l'unité de commande parallèle d'entrée/sortie (61).

9. Appareil informatique selon la revendication 7, dans lequel, lorsque l'unité de processus d'écriture (67) notifie à l'unité de transfert de données (60) la réception d'un tel ordre ECRITURE provenant du programme de sortie de fichier d'une telle paire de programmes enregistrée, l'unité de gestion parallèle d'entrée/sortie (59) contrôle la table de gestion parallèle d'entrée/sortie (62) pour déterminer si le programme d'entrée de fichier (65) de la paire est dans l'état d'attente d'écriture et, dans l'affirmative, elle commande à l'unité de transfert de données (60) de transférer des données de sortie enregistrées dans l'unité de mémoire centrale (52) par le programme de sortie de fichier (64), vers une zone de lecture de l'unité de mémoire centrale (52) qui est allouée à ce programme d'entrée de fichier (65).

10. Appareil informatique selon la revendication 8, dans lequel, lorsque l'unité de processus de lecture (68) notifie à l'unité de transfert de données (60) la réception d'un tel ordre LECTURE provenant du programme d'entrée de fichier d'une telle paire de programmes enregistrée, l'unité de gestion parallèle d'entrée/sortie (59) contrôle la table de gestion parallèle d'entrée/sortie (62) pour déterminer si le programme de sortie de fichier (64) de la paire est dans l'état d'attente de lecture et, dans l'affirmative, elle commande à l'unité de transfert de données (60) de transférer des données de sortie enregistrées dans l'unité de mémoire centrale (52) par ce programme de sortie de fichier (64), vers une zone de lecture de l'unité de mémoire centrale (52) qui est allouée au programme d'entrée de fichier (65).

11. Appareil informatique selon l'une quelconque des revendications 4 à 10, dans lequel l'unité de gestion de données (56) comprend une unité de processus de fermeture (69) pouvant fonctionner de façon à recevoir un ordre de fermeture qui est émis par le programme de sortie de fichier lorsque toutes les données à émettre par celui-ci ont été émises, ou un ordre de fermeture qui est émis par le programme d'entrée de fichier (65) lorsque l'opération d'entrée de données est achevée par celui-ci, ou lorsqu'une notification de fin de données (EOF) a été produite à la suite de l'émission d'un ordre de fermeture par le programme de sortie de fichier (64) de la paire de programmes, et pouvant fonctionner de façon à notifier la réception d'un tel ordre de fermeture à l'unité de gestion parallèle d'entrée/sortie (59).

12. Appareil informatique selon la revendication 11, dans lequel, lorsque la réception de l'ordre de fermeture est notifiée à l'unité de gestion parallèle d'entrée/sortie (59), celle-ci est capable d'actualiser l'état fonctionnel, conservé dans la table de gestion parallèle d'entrée/ sortie (62), du programme qui a émis l'ordre, et de rendre la commande à ce programme par l'intermédiaire de l'unité de processus de fermeture (69).

13. Appareil informatique selon l'une quelconque des revendications 3 à 12, dans lequel :
l'unité de gestion parallèle d'entrée/sortie (59) peut fonctionner, pendant une telle exécution parallèle des deux programmes d'une paire de programmes enregistrée, de façon à déterminer, en se basant sur les états fonctionnels respectifs des deux programmes, qui sont enregistrés dans la table de gestion parallèle d'entrée/sortie (62), si la commande doit être rendue à chaque programme de la paire, à titre de tâche; et
l'unité de gestion de travaux/tâches (57) comprend une unité de processus d'attente de tâche/terminaison d'attente (70) qui est capable d'effectuer des opérations d'attente et de terminaison d'attente en relation avec les tâches concernées.

14. Appareil informatique selon l'une quelconque des revendications précédentes, dans lequel lorsqu'un programme d'une telle paire de programmes enregistrée se termine anormalement pendant une telle exécution parallèle des deux programmes, l'unité de gestion de travaux/ tâches (57) est capable de faire en sorte que l'autre programme de la paire se termine simultanément dans un état anormal, tandis que lorsque les deux programmes de la paire se terminent normalement et un programme suivant a été désigné pour l'exécution, par un utilisateur utilisant une telle instruction de travaux, l'unité de gestion de travaux/tâches (57) lance automatiquement le programme suivant désigné.

15. Appareil informatique selon l'une quelconque des revendications précédentes, comportant un ensemble de tels systèmes d'exploitation.
